# EUROPEAN PATENT APPLICATION

(11) **EP 4 841 403 A1**
(43) Date of publication of application: **18.11.2026**
(21) Application number: 25305712.9
(22) Date of filing: 16.05.2025
(51) Int. Cl.: G06F 3/0354, G06F 3/046, B43K 29/08

(54) **MAGNET PLUGIN FOR MARKER**

(71) Applicant: Advanced Magnetic Interaction, AMI, 38170 Seyssinet-Pariset (FR); BIC Violex Single Member S.A., 14569 Anoixi (GR)
(72) Inventor: Jobert, Timothee, 38170 Seyssinet-Pariset (FR); Vallejo, Jean-Luc, 38170 Seyssinet-Pariset (FR); Hautson, Tristan, 38170 Seyssinet-Pariset (FR); Karakalas, Anargyros, 14569 Anoixi (GR)
(74) Representative: BIC

(57) **Abstract**

A magnetic adapter (200) for a writing instrument (100) comprises a tubular supporting structure (210) configured to receive at least a portion of a writing instrument body (110) of the writing instrument (100) therein, wherein the body (110) of the writing instrument (100) comprises a longitudinal axis (x). The magnetic adapter (200) comprises a magnetic body (220) coupled to the tubular supporting structure (210). The tubular supporting structure (210) comprises a first coupling arrangement (230). The first coupling arrangement (230) is configured to be releasably coupled with a second coupling arrangement (130) of the writing instrument (100) such that an axial position of the magnetic adapter (200) relative to the writing instrument (100) along the longitudinal axis (x) is fixed when coupled.

## Description

### TECHNICAL FIELD

The present disclosure relates to the technical field of determining and/or tracking a location of magnetic objects and/or passive accessories, and more specifically to a magnetic adapter for a writing instrument, to a writing instrument, to a writing instrument kit, to a writing instrument assembly, to a system for determining and/or tracking a location of a writing instrument assembly and to a method for determining and/or tracking a location of a writing instrument assembly.

### BACKGROUND

In the technical field of location determination and/or tracking of a magnetic object, the provision of one or more magnetometers allows to measure a magnetic field associated with the magnetic object. Magnetometer measurements enable determining and/or tracking of the location of the magnetic object within a sensing volume created by the plurality of magnetometers. The location may include a position and/or orientation of the magnetic object. In some cases, at least one magnetic object may be arranged in or coupled to a user-borne device, i.e., a device held or worn by a user. Some user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device.

In some applications, at least one magnetic object may be coupled to a writing instrument which may be operated by a user on a writing support surface of a writing support during a user operation. Based on the magnetic field measurements associated with the magnetic unit, the location of the writing instrument may be determined and/or tracked, e.g., relative to the writing support and/or writing support surface. Typical writing instruments may comprise ink systems which are adapted to dispense volatile inks, such as felt tip markers, highlighters, non-permanent and permanent markers, and the like. Commonly, felt pens comprise a writing tip in the form of a nib and a cap to close off the nib. The nib is typically kept wet by the ink used for writing. The space in a writing instrument comprising an ink system (e.g., including a reservoir for writing ink and a nib in fluid communication with the reservoir) is limited so that it is difficult to include components in addition to the ink system in the writing instrument while ensuring the function of the ink system. In the field of location determination and/or tracking of magnetic objects, magnetic rings are known which are coupled to an outer circumference of a writing instrument (e.g., which may be in the form of a stylus) at a random axial position, e.g., chosen based on user preferences. However, magnetic rings and estimation models to determine and/or track an associated random position relative to the writing instrument and/or relative to a writing support are complex and costly. For example, such systems often require a pressure sensing matrix and/or complicated calibration procedures to determine the location of the magnetic ring relative to the writing instrument, as well as the location of the nib and its contact point or surface, relative to a writing support. Coupling the magnetic ring to the writing instrument at a random position on the outer circumference of the writing instrument may lead to inaccurate tracking as the distance to the writing support is not exactly known, as well as less ergonomic because it may disturb the user during a writing operation.

Thus, the object of the present disclosure is to provide an improved adapter for a writing instrument, more specifically with an ink system, a writing instrument couplable with the adapter, and an associated writing instrument assembly, which may allow for improved location determination and/or tracking with a plurality of magnetometers.

### SUMMARY

The present disclosure relates to a magnetic adapter for a writing instrument as defined in claim 1, to a writing instrument as defined in claim 8, to a writing instrument assembly as defined in claim 12, to a system for determining and/or tracking a location of a writing instrument assembly as defined in claim 14 and to a method for determining and/or tracking a location of a writing instrument assembly as defined in claim 15. The dependent claims depict preferred embodiments of the magnetic adapter, the writing instrument and the writing instrument assembly.

According to a first aspect of the present disclosure, a magnetic adapter for a writing instrument comprises a tubular supporting structure configured to receive at least a portion of a writing instrument body of the writing instrument therein, wherein the body of the writing instrument comprises a longitudinal axis. Furthermore, the magnetic adapter comprises a magnetic body coupled to the tubular supporting structure, wherein the tubular supporting structure comprises a first coupling arrangement. The first coupling arrangement is configured to be releasably coupled with a second coupling arrangement of the writing instrument such that an axial position of the magnetic adapter relative to the writing instrument along the longitudinal axis is fixed when coupled. Additionally, the first coupling arrangement may be configured to be releasably coupled with a second coupling arrangement of the writing instrument such that a radial position and/or an orientation relative to the writing instrument is fixed when coupled.

According to a second aspect of the present disclosure, a writing instrument comprises a writing instrument body configured to be at least partially received within a tubular supporting structure of a magnetic adapter, wherein the magnetic adapter comprises a magnetic body coupled to the tubular supporting structure. The body comprises a longitudinal axis and a second coupling arrangement. The second coupling arrangement is configured to be releasably coupled with a first coupling arrangement of the magnetic adapter such that an axial position of the magnetic adapter relative to the writing instrument along the longitudinal axis is fixed when coupled. The second coupling arrangement may be configured to be releasably coupled with a first coupling arrangement of the magnetic adapter such that a radial position and/or an orientation of the magnetic adapter relative to the writing instrument along the longitudinal axis is fixed when coupled.

Due to the features of the magnetic adapter and writing instrument as disclosed herein, the magnetic adapter can be coupled with the writing instrument, which may comprise an ink system, such that an axial position, a radial position and/or an orientation of the magnetic body relative to a distal end of the body of the writing instrument is defined and/or fixed. More specifically, the magnetic adapter can be coupled with the writing instrument via the first coupling arrangement and the second coupling arrangement. A "fixed" axial position or distance means that the axial position and/or distance between the distal end of the writing instrument, more specifically of the body of the writing instrument, and the magnetic body, more specifically a distal end of the magnetic body, along the longitudinal axis is set or defined. In other words, the axial position between the magnetic adapter and the writing instrument is predefined and not arbitrary or adjustable. The same may apply to the radial position and/or the orientation, which may stay the same, i.e., the magnetic body may not be simply translated in radial direction and/or rotated about the body longitudinal axis and/or tilted relative to the writing instrument to comprise different positions and/or orientations when coupled. The radial position may be the position of the magnetic body in radial direction of the writing instrument, which may be defined perpendicular to the longitudinal axis. A defined and/or fixed radial position as described herein means that a radial position of the magnetic body is set or defined in the radial direction when coupled. The magnetic body may comprise a magnetic body longitudinal axis. The orientation may refer to an orientation between the magnetic body longitudinal axis and the body longitudinal axis of the writing instrument. In embodiments, the orientation may also refer to a rotational orientation of the magnetic body about the body longitudinal axis. A defined and/or fixed orientation as described herein can mean that the magnetic body longitudinal axis does not tilt relative to the body longitudinal axis of the writing instrument when coupled. In examples, the magnetic body longitudinal axis may extend coaxial or parallel (being fixed) to the body longitudinal axis when coupled. In other examples, the magnetic body longitudinal axis may extend at a fixed angle relative to the body longitudinal axis when coupled. Additionally or alternatively, the defined and/or fixed orientation as described herein may mean that the magnetic body is rotationally fixed about the body longitudinal axis of the writing instrument when coupled. In comparison to a simple ring-shaped magnet which may be coupled to an outer circumference of a common pencil at a random axial position (which may be randomly chosen by a user based on user preferences), the first and second coupling arrangements provide a defined axial position, radial position and/or orientation of the magnetic adapter relative to the writing instrument when coupled. The first and second coupling arrangements can provide a defined orientation of the magnetic adapter, more specifically of the magnetic body relative to the writing instrument. This can provide improved location determination and/or tracking with a plurality of magnetometers of the magnetic body in at least five degrees of freedom and thus the writing instrument assembly since the axial position, radial position and/or orientation of the magnetic body relative to the writing instrument is known. The axial position, radial position and/or orientation does not change over the lifetime, thus leading to improved accuracy during location determination and/or tracking. Furthermore, the configuration of the magnetic adapter and the writing instrument, which may comprise an ink system, allow for effective ink flow to a nib of the writing instrument. When coupled, the magnetic body may be immovable relative to the writing instrument (e.g., the magnetic adapter may not be simply translated along the writing instrument based on an axial force as is the case for a magnetic ring simply coupled to an outer circumference), until a user decouples the magnetic adapter from the writing instrument. The same may apply to the radial position and/or orientation, which may stay the same as described above. Due to the configuration of the magnetic adapter and the writing instrument, the magnetic body may be located close to the nib of the writing instrument, thereby improving accuracy during location determination and/or tracking of the writing instrument during a writing operation by a user. Improved accuracy can be provided during the lifetime of the magnetic adapter and/or writing instrument. Furthermore, the magnetic body may be removably coupled with the magnetic adapter, and/or the magnetic adapter may be removably coupled with the writing instrument. Consequently, the magnetic body may be easily salvaged from the magnetic adapter and/or writing instrument, e.g., when the writing instrument, parts of the writing instrument like the nib and/or the magnetic adapter are worn. In addition, due to the configuration of the magnetic adapter and the writing instrument, ergonomics can be improved during a user operation with the writing instrument assembly, particularly in comparison to magnetic rings attached to an outer circumference of a writing instrument which may disturb during a writing operation. Furthermore, costs of the magnetic adapter and/or writing instrument can be reduced.

According to a third aspect of the present disclosure, a writing instrument kit comprises at least one magnetic adapter for a writing instrument according to the first aspect of the present disclosure, and at least one writing instrument according to the second aspect of the present disclosure.

According to a fourth aspect of the present disclosure, a writing instrument assembly comprises a magnetic adapter according to the first aspect of the present disclosure, and a writing instrument according to the second aspect of the present disclosure, wherein the magnetic adapter is coupled with the writing instrument.

According to a fifth aspect of the present disclosure, a system for determining and/or tracking of a writing instrument assembly by a user comprises a writing instrument assembly according to the fourth aspect of the present disclosure, and a plurality of magnetometers configured to create a sensing volume and configured to measure a magnetic field associated with the magnetic body of the magnetic adapter. The system, more specifically a processing unit of or coupled with the system, is configured to track movement and/or location of the writing instrument assembly in at least five degrees of freedom based on the magnetic field measurements.

According to a sixth aspect of the present disclosure, a method for determining and/or tracking a location of a writing instrument assembly comprises:
a) obtaining magnetic field measurements associated with (or generated by) a magnetic body of a magnetic adapter of a writing instrument assembly according to the fourth aspect of the present disclosure and measured with a plurality of magnetometers, and
b) determining and/or tracking a location of the writing instrument assembly based on the obtained or collected magnetic field measurements.

According to a seventh aspect of the present disclosure, the method is a computer-implemented method and a computer system is configured to execute the computer-implemented method according to the sixth aspect of the present disclosure. According to an eighth aspect of the present disclosure, the method is a computer-implemented method and a computer program is configured to execute the computer-implemented method according to the sixth aspect of the present disclosure. According to a ninth aspect of the present disclosure, a computer-readable medium or signal storing the computer program according to the eighth aspect of the present disclosure is provided.

The above features, embodiments and advantageous technical effects described for the magnetic adapter, the writing instrument and the writing instrument assembly may also apply to the writing instrument kit, the system, the method, the computer system, the computer program and the computer-readable medium or signal.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a system for determining and/or tracking a location of a writing instrument assembly according to aspects of the present disclosure;
- **Figs. 2**: is a schematic view of a writing instrument assembly comprising a magnetic adapter and a writing instrument according to aspects of the present disclosure;
- **Fig. 3A to 3D**: are cross-sectional views of the writing instrument assembly comprising the writing instrument and the magnetic adapter, as well as a rear view of the magnetic adapter, according to a first embodiment;
- **Fig. 4A to 4D**: are cross-sectional views of the writing instrument assembly comprising the writing instrument and the magnetic adapter, as well as a rear view of the magnetic adapter, according to a second embodiment;
- **Figs. 5A to 5D**: are cross-sectional views of the writing instrument assembly comprising the writing instrument and the magnetic adapter, as well as a rear view of the magnetic adapter, according to a third embodiment;
- **Fig. 6**: is a process flow diagram of a method for determining and/or tracking a location of a writing instrument assembly according to aspects of the present disclosure.

### DETAILED DESCRIPTION

Embodiments of a magnetic adapter for a writing instrument, of the writing instrument, of a writing instrument kit, of a writing instrument assembly, of a system for determining and/or tracking a location of a writing instrument assembly and of a method for determining and/or tracking a location of a writing instrument assembly according to aspects of the present disclosure will be described with reference to the drawings as follows.

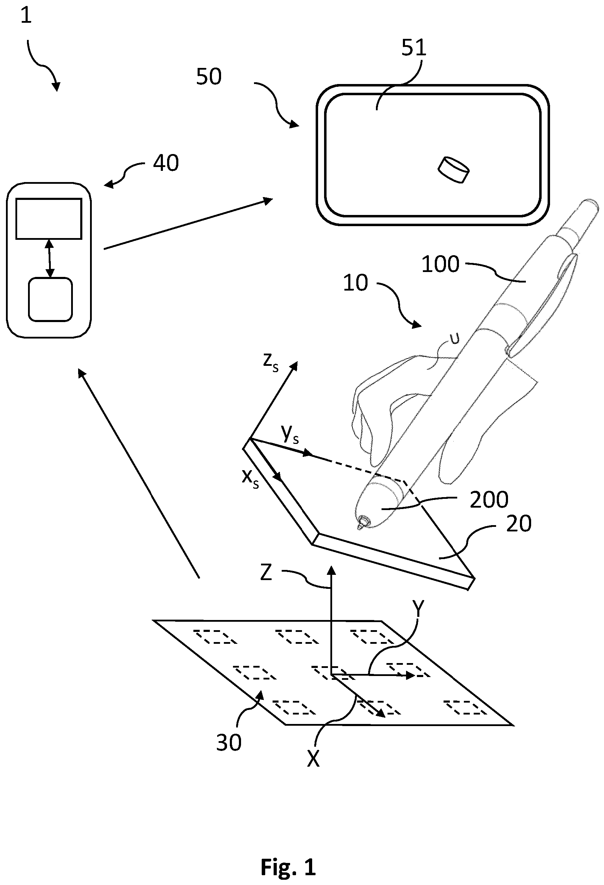

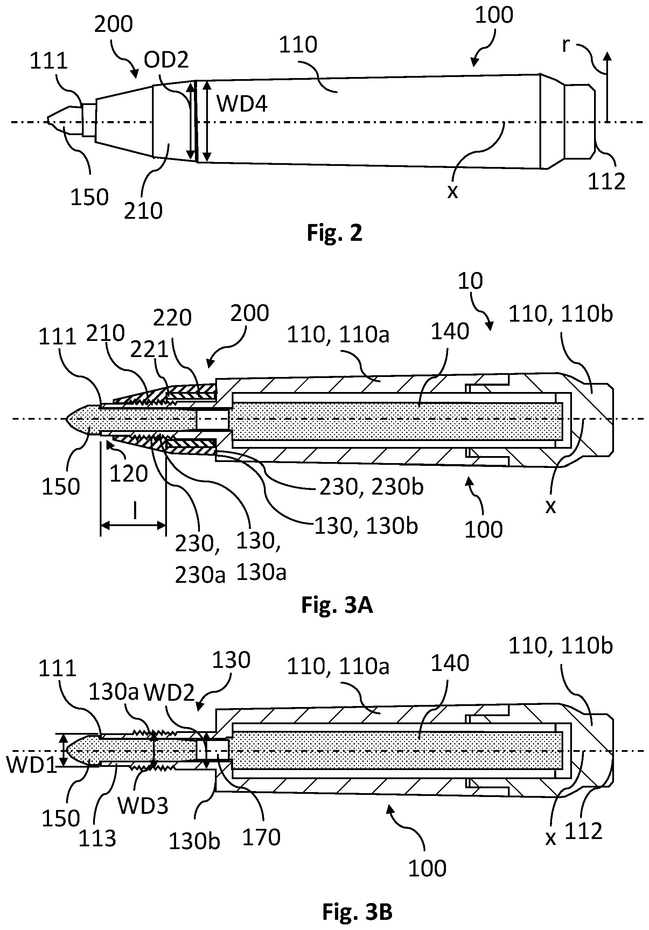

Fig. 1 is a schematic view of a system 1 for determining and/or tracking a location of a writing instrument assembly 10 according to aspects of the present disclosure. In other words, the system 1 may be adapted for determining a manipulation of the writing instrument assembly 10 by a user during a writing operation, more specifically relative to a writing support 20. The system 1 comprises the writing instrument assembly 10. According to an aspect of the present disclosure, the writing instrument assembly 10 comprises a writing instrument 100 and a magnetic adapter 200, wherein the magnetic adapter 200 is coupled with the writing instrument 100. The magnetic adapter 200 may be coupled with the writing instrument 100 via a first coupling arrangement 230 and a second coupling arrangement 130, wherein an axial position of the magnetic adapter 200 relative to the writing instrument 100 along the longitudinal axis x is fixed, more specifically wherein the magnetic adapter 200 may be non-translatable relative to the writing instrument 100 along a body longitudinal axis x. Figs. 2 to 5D are schematic views and cross-sectional views of the writing instrument assembly 10, the writing instrument 100 and the magnetic adapter 200 according to aspects of the present disclosure. Referring to Figs. 2 to 5D, the magnetic adapter 200 for a writing instrument 100 comprises a tubular supporting structure 210 configured to receive at least a portion, more specifically a distal end portion 113 or part of the distal end portion 113, of a writing instrument body 110 (in the following "the body") of the writing instrument 100 therein. The body 110 of the writing instrument 100 comprises the body longitudinal axis x. A magnetic body 220 is coupled to the tubular supporting structure 210. The tubular supporting structure 210 comprises the first coupling arrangement 230. The first coupling arrangement 230 is configured to be releasably coupled with the second coupling arrangement 130 of the writing instrument 100 such that a location, more specifically the axial position, of the magnetic adapter 200 relative to the writing instrument 100 along the longitudinal axis x is fixed when coupled. The first coupling arrangement 230 may be configured to be releasably coupled with the second coupling arrangement 130 of the writing instrument 100 such that a radial position and/or an orientation (the radial position and orientation are described in more detail below) of the magnetic adapter 200 relative to the writing instrument 100 may be fixed when coupled.

According to an aspect of the present disclosure, a writing instrument kit may comprise at least one magnetic adapter 200 for a writing instrument 100 as described herein, and at least one writing instrument 100 as described herein. In some embodiments, the kit may comprise two, three, four, five or more magnetic adapters 200. In some embodiments, the kit may comprise two, three, four, five or more writing instruments 200. The number of magnetic adapters 200 may be equal to or different than the number of writing instruments 100. In some embodiments, one magnetic adapter 200 and at least two or at least three writing instruments 100 may be provided in the kit. The magnetic adapter 200 according to the present disclosure may comprise at least one characteristic suitable to assist a user to couple the magnetic adapter 200 with the correct writing instrument 100. In some embodiments, the at least one characteristic may be a visible feature and/or a haptic feature. In some examples, the at least one characteristic may be a color, a surface marking and/or a sign on the magnetic adapter 200. For instance, the magnetic adapter 200 may comprise a blue color and sign with a brush indicating that the magnetic adapter 200 should be coupled with a writing instrument 100 comprising blue ink and having a brush-like nib.

According to aspects of the present disclosure, and referring to Figs. 2 to 5D, the writing instrument 100 may be configured to couple with the magnetic adapter 200. The writing instrument 100 comprises the writing instrument body 110 configured to be at least partially received within the tubular supporting structure 210 of the magnetic adapter 200. As mentioned above, the magnetic adapter 200 comprises the magnetic body 220 coupled to the tubular supporting structure 210. The body 110 comprises the longitudinal axis x and the second coupling arrangement 130. The second coupling arrangement 130 is configured to be releasably coupled with the first coupling arrangement 230 of the magnetic adapter 200 such that the axial position of the magnetic adapter 200 relative to the writing instrument 100 along the longitudinal axis x is fixed when coupled. The second coupling arrangement 130 may be configured to be releasably coupled with the first coupling arrangement 230 of the magnetic adapter 200 such that the radial position and/or orientation of the magnetic adapter 200 relative to the writing instrument 100 may be fixed when coupled.

Due to the features of the magnetic adapter 200 and writing instrument 100 as disclosed herein, the magnetic adapter 200 can be coupled with the writing instrument 100, which may comprise an ink system, such that the axial position, radial position and/or orientation of the magnetic body 220 relative to a distal end 111 of the body 110 of the writing instrument 100 is defined and/or fixed. More specifically, the magnetic adapter 200 can be coupled with the writing instrument 100 via the first coupling arrangement 230 and the second coupling arrangement 130. The magnetic adapter 200 comprising the magnetic body 220 may be coupled with the writing instrument 100 such that relative movement between the magnetic adapter 200, more specifically the magnetic body 220, and the writing instrument 100 is prevented when coupled, particularly in the direction of the longitudinal body axis x and radial direction r. The magnetic adapter 200 may be coupled with the writing instrument 100 such that relative movement in the radial direction r and/or rotation of the magnetic body 220 relative to the writing instrument 100 (e.g., about the longitudinal axis x and/or relative to the longitudinal axis x) is prevented. A "fixed" axial position or distance l means that the axial position and/or distance l between the distal end 111 of the writing instrument 100 (in particular, the distal end 111 of the writing instrument body 100) and the magnetic body 220, more specifically a distal end 211 of the magnetic body 220, along the longitudinal axis is set or defined. In other words, the axial position between the magnetic adapter and the writing instrument is predefined and not arbitrary or adjustable. The same may apply to the radial position (with regard to the radial direction r) and/or orientation between the magnetic adapter 200 and the writing instrument 100, i.e., the magnetic body 220 may not be simply translated in radial direction and/or rotated about the body longitudinal axis and/or tilted relative to the writing instrument 100 to comprise different positions and/or orientations when coupled. The radial position may be the position of the magnetic body 220 in radial direction r of the writing instrument 100, which may be defined perpendicular to the body longitudinal axis x. A defined and/or fixed radial position as described herein means that a radial position of the magnetic body 220 is set or defined in the radial direction r when coupled. The orientation may refer to an orientation between the magnetic body longitudinal axis m and the body longitudinal axis x of the writing instrument 100. Additionally or alternatively, the orientation may refer to a rotational orientation of the magnetic body 220 about the body longitudinal axis x. A defined and/or fixed orientation as described herein can mean that the magnetic body longitudinal axis m does not tilt relative to the body longitudinal axis x of the writing instrument 100 when coupled. In examples, the magnetic body longitudinal axis m may extend coaxial or parallel (being fixed in each case) to the body longitudinal axis x when coupled. In other examples, the magnetic body longitudinal axis m may extend at a fixed angle (or tilt) relative to the body longitudinal axis x when coupled. Additionally or alternatively, the defined and/or fixed orientation as described herein may mean that the magnetic body 220 is rotationally fixed about the body longitudinal axis x of the writing instrument when coupled. In comparison to a simple ring-shaped magnet which may be coupled to an outer circumference of a common pencil at a random axial position (which may be randomly chosen by a user based on user preferences), the first and second coupling arrangements 230, 130 provide a defined axial position, radial position and/or orientation of the magnetic adapter 200 relative to the writing instrument 100 when coupled. The first and second coupling arrangements 230, 130 may provide a defined orientation of the magnetic adapter 200, more specifically the magnetic body 220 relative to the writing instrument 100. The above features may provide improved location determination and/or tracking with a plurality of magnetometers 30 of the magnetic body 220 in at least five degrees of freedom and thus the writing instrument 100 since the axial position, radial position and/or orientation of the magnetic body 220 relative to the writing instrument 100 is known. The axial position, radial position and/or orientation do not change over the lifetime, thus leading to improved accuracy during location determination and/or tracking. Furthermore, the configuration of the magnetic adapter 200 and the writing instrument 100, which may comprise an ink system, allow for effective ink flow to a nib 150 of the writing instrument 100. When coupled, the magnetic body 200 may be immovable relative to the writing instrument (e.g., the magnetic adapter may not be simply translated along the writing instrument based on an axial force as is the case for a magnetic ring simply coupled to an outer circumference), until a user decouples the magnetic adapter 200 from the writing instrument 100. The same may apply to the radial position and/or orientation, which may stay the same until a user decouples the magnetic adapter from the writing instrument. Due to the configuration of the magnetic adapter 200 and the writing instrument 100, the magnetic body 220 may be located close to the nib 150 of the writing instrument 100, thereby improving accuracy during location determination and/or tracking of the writing instrument 100 during a writing operation by a user. Furthermore, the magnetic body 220 may be removably coupled with the magnetic adapter 100, and/or the magnetic adapter 200 may be removably coupled with the writing instrument 100. Consequently, the magnetic body 220 may be easily salvaged from the magnetic adapter 200 and/or writing instrument 100, e.g., when the writing instrument 100, parts of the writing instrument 100 like the nib 150 and/or the magnetic adapter 200 are worn. In addition, due to the configuration of the magnetic adapter 200 and the writing instrument 100, ergonomics can be improved during a user operation with the writing instrument assembly 10, particularly in comparison to magnetic rings attached to an outer circumference of a writing instrument which may disturb during a writing operation. Furthermore, costs of the magnetic adapter 200 and/or writing instrument 100 can be reduced. In embodiments, the writing instrument 100 may not comprise a magnetic body, which leads to reduced costs of the writing instrument 100. When worn, the writing instrument 100 can be simply replaced by a new writing instrument which may be coupled with the magnetic adapter 200 as described herein.

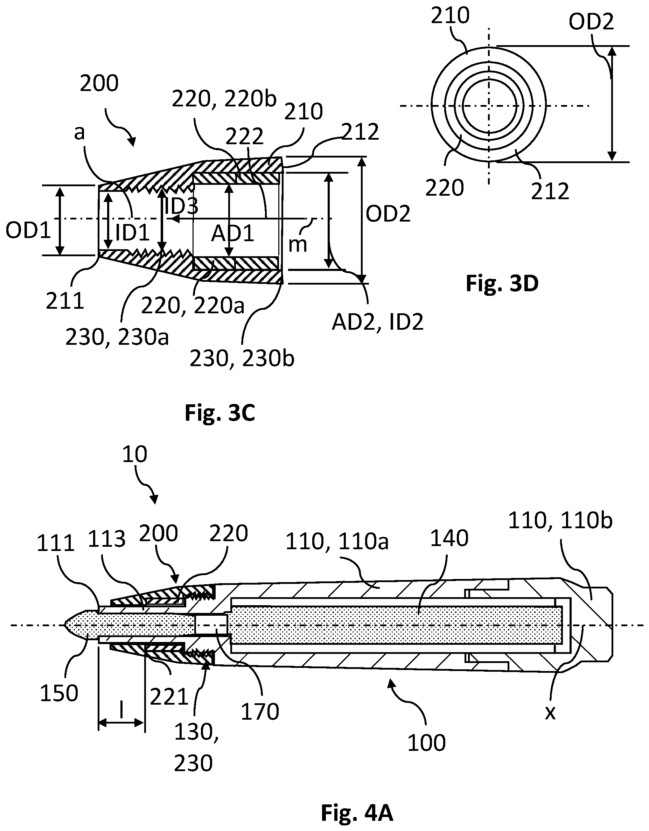

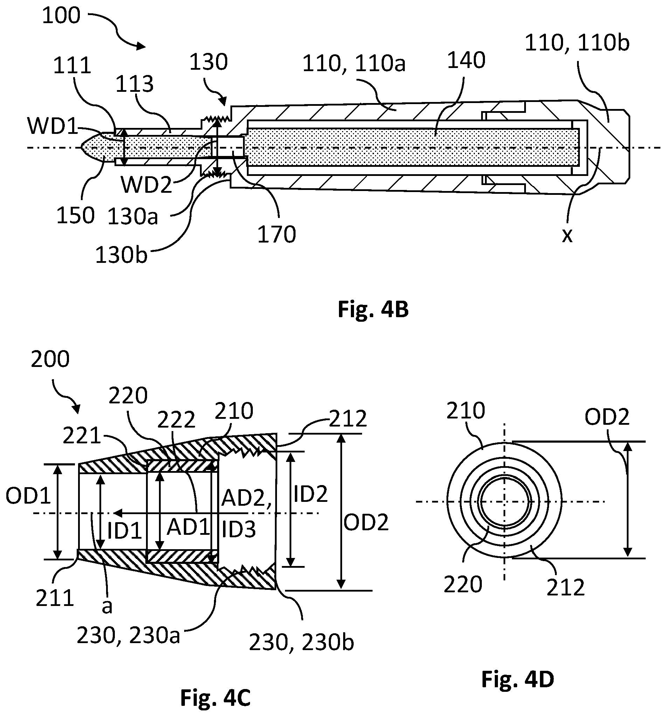

As shown in Figs. 3A, 4A and 5A, a distance l along the longitudinal axis x between the distal end 111 of the writing instrument body 110 and the magnetic body 220 is fixed and/or predefined when coupled. Alternatively, the distance l may be defined between the distal end 211 of the magnetic adapter 200 and a second stop face 130b of the writing instrument 100. The magnetic adapter may be coupled with the writing instrument 100 such that the magnetic body 220 is located closer to the distal end 111 than to a proximal end 112 of the writing instrument 100. The magnetic adapter 200 comprises the distal end 211 and proximal end 212. When coupled with the writing instrument 100, and during a writing operation by a user (i.e. when the nib 150 is in contact with a writing support and/or writing surface), the distal end 211 of the magnetic adapter 200 is located closer to a writing support and/or writing surface than the proximal end 212 of the magnetic adapter 200. In other words, when coupled, the proximal end 212 of the magnetic adapter 200 is located closer to the proximal end 112 of the writing instrument 110 than the distal end 211 of the magnetic adapter 200. As shown in the Figs., the magnetic adapter 200 may be configured as a writing instrument tip component. The body 110 may comprise the distal end portion 113 including the distal end 111. In some embodiments (see, e.g., Figs. 3A and 4A), the distal end portion 113 may extend through the magnetic adapter 200 and/or the nib 150 may protrude distally of the magnetic adapter 200 when coupled. The magnetic adapter 200 may be configured to be coupled with the distal end portion 113 of the body 110. The distal end portion 113 is configured to be at least partially received within the tubular structure 210 of the magnetic adapter 200 (and in more detail, within the magnetic body 220). Based on these features, the magnetic body 220 can be moved nearer to the writing tip of the writing instrument 100 (and nib 150), or may be formed as the writing tip (or a component thereof), which may lead to improved and more accurate tracking, since a deviation related to angles between the writing instrument and the writing surface during use is reduced (this will be explained in more detail below).

As shown in Fig. 2A, the writing instrument 100 may also comprise a radial direction r. The radial direction r may extend perpendicular to the body longitudinal axis x. Referring to Figs. 3A, 3B, 4A, 4B, 5A and 5B, the writing instrument 100 may comprise an ink system which may be configured to dispense volatile inks. The body 110 may comprise a writing orifice 120 at the distal end 111 thereof. The ink system may comprise a reservoir 140 for storing a writing ink arranged proximally to the writing orifice 120 and the nib 150 is arranged distally to the reservoir 140 and in fluid communication with the reservoir 140. The nib 150 may extend substantially along the body longitudinal axis x and may comprise a distal end portion 151 protruding through the writing orifice 120. The writing instrument assembly 10 may allow for location determination and/or tracking of the magnetic body 220 of the magnetic adapter 200 and the writing instrument 100 in at least five degrees of freedom with increased and/or improved accuracy while providing effective ink flow to the nib 150. More specifically, although space is limited in a writing instrument that comprises an ink system, the configuration of the writing instrument 100 and magnetic adapter 200 according to the present disclosure may allow for improved location determination and/or tracking of the writing instrument 100 while providing effective ink flow and improved ergonomics.

During a writing operation, the writing instrument assembly 10 is operated on a writing surface (e.g., a sheet of paper, a whiteboard surface, a blackboard surface, a glass surface, and/or a dry erase compatible film) or on a writing support surface 210 of a writing support 20. Of course, the writing instrument assembly may also be used for drawing. A contact is created between the nib 150 and the writing surface (and/or the writing support surface) during a writing and/or drawing operation. Determining and/or tracking the location of the writing instrument assembly 10 is based on magnetic field measurements of the magnetic body 220 with magnetometers 30 (detailed description below). Since the location (including position and/or orientation) of the magnetic adapter comprising the magnetic body 220 relative to the writing instrument 220 is known and may include, e.g., a fixed distance and/or orientation of the magnetic body 220 relative to the writing instrument 100 (e.g., to the nib 150), more specifically relative to a contact point or surface of the nib 150 with the writing surface (the contact point or surface of the nib 150 are described in detail below), the location of the writing instrument assembly 10 relative to the writing support 20, writing support surface and/or writing surface can be determined based on the magnetic field measurements. This can be provided without the provision of additional sensors such as a pressure sensor of the writing support. During the writing operation, the writing instrument 100 is tilted relative to the writing surface (and/or writing support surface 210). The greater the distance between the magnetic body 220 and the nib 150, the less accurate the determination (or estimation) of the contact point or surface of the nib 150 on the writing surface based on the magnetic field measurements. Due to the fixed coupling of the magnetic adapter 200 to the writing instrument 100 close to the nib 150, increased accuracy during location determination and/or tracking of the writing instrument assembly 10 can be provided.

As mentioned above, the nib 150 may be removably coupled to the body 110. The magnetic body 220 may be removably coupled to the magnetic adapter 200, which in turn may be removably coupled with the writing instrument 100. In embodiments, the magnetic body 220 may be clamped between the writing instrument 100 and the magnetic adapter 220, particularly in the direction of the longitudinal axis x. In some embodiments, the magnetic body 220 may be fixedly coupled to the tubular supporting structure 210, optionally to an inner circumference of the supporting structure 210. The magnetic body 220 may be coupled to the inner circumference by a press fit. The magnetic body 220 may be (fixedly) coupled with the tubular supporting structure 210 such that the magnetic body 220 is invisible from the outside of the magnetic adapter 200. The magnetic body 220 may be easily salvaged from the writing instrument assembly 10. In an example, the nib 150 may be easily replaced in the writing instrument 100 when worn. Furthermore, costs of the writing instrument 100 can be reduced, e.g., since the magnetic adapter 200 comprising the magnetic body 220 and/or the nib 150 may be removably coupled to the writing instrument 100. In an example, when the writing instrument 100 is worn, a user may decouple the magnetic adapter 200 from the writing instrument 100 and get a new writing instrument 100, which may be sold without the magnetic adapter 220 at a lower price. The user may couple the magnetic adapter 220 to the new writing instrument 100 for use. The same applies to a replacement of the nib 150. Compared to writing instruments in which a magnetic body may be permanently integrated and which is disposed of with a worn writing instrument, the magnetic adapter 200 according to the present disclosure allows reuse. This improves environmental protection, as fewer rare earths that contribute to environmental pollution (such as those present in a magnetic body made of a neodymium magnet) are disposed of.

The writing instrument assembly 10, more specifically the magnetic adapter 220 and/or the writing instrument 100, may be electrically and/or electronically passive. Electrically passive means that the writing instrument assembly 10 may not comprise a power source (e.g., batteries) and/or means to receive power (e.g., wireless power transmission via an inductive coil) for powering a feature (e.g., an electronic feature) of the writing instrument assembly 10. Electronically passive means that no computation or processing occurs (or happens) on the writing instrument assembly 10. However, in some embodiments, the writing instrument assembly 10, e.g., the writing instrument 100, may still comprise electronic features such as light emitters, buttons, and/or transmission means such as RF (Radio Frequency) or BLE (Bluetooth Low Energy). In some embodiments, the writing instrument 100 may comprise a power source such as a battery and/or a wireless power receiver to receive power wirelessly.

Referring to Fig. 1, the system 1 may also comprise a plurality of magnetometers 30 (i.e., at least two magnetometers). The plurality of magnetometers 30 is configured to create a sensing volume and to measure a magnetic field associated with, or generated by, the magnetic body 220 of the magnetic adapter 200 (as well as of any additional magnetic bodies that may be provided). In some embodiments, the system 1 may comprise or may be coupled with at least one processing unit 40 configured to control a representation of the writing instrument assembly 10 on at least one output device 50 of the system 1, which may comprise a display 51 or screen. In embodiments, the system 1 may comprise the writing instrument assembly 10 and a digital device, e.g., an electronic interactive display, like a tablet computer. The digital device may comprise the plurality of magnetometers 30. The plurality of magnetometers 30 may be fixedly arranged in a casing of the digital device. The plurality of magnetometers 30 define a fixed position and/or orientation with respect to each other. A magnetometer plane (indicated in Fig. 1) may be defined by a plane that extends through a majority of the plurality of magnetometers 30. More specifically, the magnetometer plane may extend through centres, more specifically geometric centres, of a majority of the plurality of magnetometers 30. In other words, most of the magnetometers of the plurality of magnetometers 30 may be arranged in a common plane, i.e., the magnetometer plane. However, one or more magnetometers of the plurality of magnetometers 30 may be distanced and/or inclined with respect to the common plane, e.g., due to manufacturing issues and/or tolerances and/or manufacturing design constraints. The magnetometer plane may additionally or alternatively be defined by a plane in which the magnetometers of the plurality of magnetometers 30 are predominantly arranged. The digital device may comprise the processing unit 40 and/or the at least one output device 50. The digital device may comprise the writing support 20 and/or a writing surface or writing support surface which may be defined on the writing support. The at least one processing unit 40 may be configured to control a representation of the writing instrument assembly 10 as a virtual object on the at least one output device 50. A movement of the virtual object on the at least one output device 50 may be based on a virtual reproduction of a determined and/or tracked location of the writing instrument assembly 10. The visual reproduction may be a motion of a cursor on the output device 50. In embodiments, the visual reproduction may be any icon (e.g., an arrow, a picture). During a user operation, the nib 150 may be in contact with the writing support surface (and/or writing surface) on the writing support 20. In some examples, the writing instrument assembly 10 may include an erasing feature (e.g., in the form of a dry erase marker), e.g., at a proximal end 112 of the body 110. In some examples, the writing instrument assembly 10 may also be operated within the sensing volume M but not on the writing support 20 (i.e., in the air). In this case, the writing instrument assembly 10 may be used, e.g., as a pointer. The writing instrument 100 may be a felt tip marker, a highlighter, a non-permanent permanent marker and/or a may comprise the erasing feature (e.g., dry erase marker), and the like. In some embodiments, the writing instrument 100 may be a drawing instrument, a toy, a pencil such as a mechanical pencil or a pen.

The magnetometers 30 may be communicatively coupled with the at least one processing unit 40, particularly to exchange magnetic field measurements. The at least one processing unit 40 may be configured to collect magnetic field measurements from the at least one magnetometer 30 (or plurality of magnetometers). The sensing volume may have an ellipsoidal form. The magnetometers 30 may be configured to measure the magnetic field created by the magnetic body 220 in the directions of a reference coordinate system XYZ. The system 1, more specifically the digital device, may comprise the reference coordinate system XYZ. The reference coordinate system XYZ may comprise a first reference axis X, a second reference axis Y and a vertical reference axis Z. The first reference axis X and the second reference axis Y may be defined on or parallel to the magnetometer plane and may be orthogonal to each other. The vertical reference axis Z may be orthogonal to the magnetometer plane. The vertical reference axis Z may extend through a centre of the plurality of magnetometers 30. Each magnetometer 30 may be configured to perform magnetic field measurements in the direction of one axis (i.e., one dimension), two axes (i.e., two dimensions), or three axes (i.e., three dimensions). The number of magnetometers 30 provided may depend on the desired size of the sensing volume M within which writing instrument assembly 10 is operated. In examples, a first number of magnetometers may be integrated in a first magnetometer support and at least a second number of magnetometers may be integrated in at least one second magnetometer support, which may be at an angle relative to the first magnetometer support. The magnetometers 30 may be configured to collect magnetic field measurements associated with the magnetic body 220 within the sensing volume M up to a maximum measurement distance, wherein the maximum measurement distance may be a distance within which the magnetic field measurements can be provided with acceptable reliability and/or accuracy. In embodiments, the maximum measurement distance may be 18cm, more specifically 15cm. During use, the magnetic body 220 described herein may be operated within the maximum measurement distance. The minimum magnetic field generated by the magnetic body 220 that may be tracked with system 1 may comprise at least 1 micro tesla, preferably at least 100 micro tesla, e.g., which may be provided within the distance as mentioned above.

The writing instrument body 110 may be an elongate, tubular body. In some embodiments, the body 110 may be symmetrical, however, this is not required. In some embodiments, the body 110 may comprise a straight or curved shape. The body 110 may comprise a cylindrical shape on the inside and/or outside. The body 110 may comprise the proximal end 112 on an opposite side relative to the distal end 111. During a writing operation, the distal end 111 is located closer to the writing support 20 than the proximal end 112. As shown e.g., in Figs. 2 to 3B, 4A, 4B, 5A and 5B, the body 110 may be closed at the proximal end 112.

The magnetic body 220 may be configured to generate a magnetic field. In some embodiments, the magnetic body 220 may comprise or may be a permanent magnet, more specifically a single permanent magnet. The magnetic body 220 may be configured to receive a portion, e.g., the distal end portion 113, of the writing instrument 100 therein. As shown, e.g. in Figs. 3A, 4A and 5A, the magnetic body 220 may be tubular or ring-shaped. The magnetic body 220 may comprise a magnetic body longitudinal axis m extending along a length of the magnetic body 220. The magnetic body 220 may be coupled with the tubular supporting structure 210 such that the magnetic body longitudinal axis m extends coaxially with a supporting structure longitudinal axis a (see, e.g., Figs. 3C, 4C and 5C). The magnetic body 220 may be configured to define a magnetic moment vector 222. The magnetic moment vector 222 may be substantially coaxial with a magnetic body longitudinal axis m. **In** some embodiments, the magnetic moment vector 222 may be substantially coaxial with a supporting structure longitudinal axis a. **In** embodiments, the magnetic body 220 may have a shape with the magnetic body longitudinal axis m about which the magnetic body 220 is rotationally symmetric, for example the ring shape or the tubular shape. When the magnetic body 220 with a rotationally symmetric magnetic field is desired, in an ideal case, the magnetic moment vector 222 (or magnetization direction) coincides with the magnetic body longitudinal axis m about which the magnetic body 220 is rotationally cylindrical. However, an almost perfect alignment of the magnetic moment vector 222 (e.g. less than 0.5° angular deviation) and magnetic body longitudinal axis m are very complex and expensive. Such angular deviation can cause errors in orientation measurements of the magnetic body 220 and thus in inaccurate location determination and/or tracking of the writing instrument assembly 10. However, such angular deviation may be reduced or eliminated, as also described, e.g., in patent application EP4390636A1.

As shown in Fig. 3C, and which may be implemented in all embodiments disclosed herein, the magnetic body 220 may comprise a first tubular or ring-shaped magnetic body 220a and at least one second tubular or ring-shaped magnetic body 220b coupled with the first tubular or ring-shaped magnetic body 220a. Each of the first and second tubular or ring-shaped magnetic bodies 220a, 220b may be configured to generate a magnetic field. The first and second tubular or ring-shaped magnetic bodies 220a, 220b together may define the magnetic body longitudinal axis m and/or the magnetic moment vector 222. More specifically, the first and second tubular or ring-shaped magnetic bodies 220a, 220b may be firmly coupled (e.g., via adhesive) and rotationally oriented relative to each other such that the magnetic moment vector 222 is substantially coaxial with the magnetic body longitudinal axis m. In other words, the first and second tubular or ring-shaped magnetic bodies 220a, 220b being coupled with each other together form the magnetic body longitudinal axis m, as well as the resulting magnetic moment vector 222. Due to the magnetic adapter 200 comprising the magnetic body 220 and configured to be coupled with the writing instrument 100 such that the magnetic body longitudinal axis m and/or the magnetic moment vector 222 may be substantially coaxial to the body longitudinal axis x, an angular deviation can be reduced. Improved location determination and/or tracking of the writing instrument assembly 10 can be provided without the usage of complex and/or costly estimation models.

In some embodiments, the magnetic bodies 220a, 220b may be magnetically coupled with each other. In embodiments, each of the first and second tubular or ring-shaped magnetic bodies 220a, 220b may be a permanent magnet. In embodiments, the magnetic body 220 may comprise more than two tubular or ring-shaped magnetic bodies 220a, 220b, e.g., three, four, five, or six tubular or ring-shaped magnetic bodies. In some embodiments, the magnetic adapter 200 may comprise at least one additional magnetic body (not shown in the Figs.), which may be coupled to the magnetic adapter 200 at a non-zero distance relative to and separated from the magnetic body 220. The principles described herein for the magnetic body 220 may also apply to the at least one additional magnetic body. In embodiments, the at least one additional magnetic body may comprise the same shape as the magnetic body 220 or a different shape. The at least one additional magnetic body may be configured to generate a second magnetic field different from the magnetic field generated by the magnetic body 220. In some examples, the at least one additional magnetic body may be a cylindrical magnet or a spherical magnet and may be connected to or integrated in the tubular supporting structure 210. In some embodiments (not shown in the Figs.), the at least one additional magnetic body may be connected to the writing instrument 100.

The term "magnetic body" may refer to an object which may comprise components of or may be made of magnetic material, i.e., a material that has magnetic properties measurable by at least one magnetometer 30. In embodiments, the magnetic body 220 and/or at least one additional magnetic body may be configured to generate a non-zero magnetic field. They may comprise a paramagnetic or diamagnetic material. In embodiments, they may comprise a ferromagnetic material or a ferrimagnetic material. As already mentioned, the magnetic body may be a permanent magnet. The magnetic body 220 and/or at least one additional magnetic body may be configured to create or generate a symmetric magnetic field, more specifically wherein the magnetic field may be rotationally symmetric. A rotation of the magnetic body may thus be detectable about a first rotation axis and a second rotation axis of the magnetic objects, more specifically wherein the first rotation axis may be perpendicular to the second rotation axis. However, a rotation about a third rotation axis (being perpendicular to the first rotation axis and the second rotation axis) may not be detectable since the magnetic field may be rotationally symmetric. The magnetic body may be axially magnetized in this case (see, e.g., magnetization axis or magnetic moment vector). However, in some embodiments (not shown), the magnetic body may comprise a magnetization axis being at an orientation with respect to the magnetic object such that a rotation of the magnetic field may be detectable about a first rotation axis, a second rotation axis and a third rotation axis of the magnetic object. In this case the magnetic body may be configured to create or generate an asymmetric magnetic field, more specifically wherein the magnetic field may be rotationally asymmetric. This may be the case for a magnetic body being width magnetized or thickness magnetized.

The plurality of magnetometers 30 may be configured to measure the (resulting) magnetic field which is based on the sum of the magnetic fields of each magnetic body (i.e., the superposition of the magnetic fields of each magnetic object). The (resulting) magnetic field of the magnetic body 220 may also be described with a magnetic signature the magnetic body 220 comprises. In other words, the magnetic body 220 may be configured to define a magnetic signature. The magnetic signature may be detectable with the plurality of magnetometers 30. The magnetic signature may be indicative of magnetic field strength (e.g., intensity), magnetic field shape (e.g., shape, symmetry, deformation) and/or magnetic field location (e.g., position, orientation including direction). The magnetic signature of the magnetic body 220 may comprise a set of vectors describing a magnetic vector field of the magnetic objects (more specifically, the resulting magnetic field of the magnetic body 220). As already mentioned above, the magnetic body 220 may comprise the magnetic moment vector and/or a position vector associated with the magnetic field. In other words, the magnetic body 220 may be modeled as a magnetic dipole being defined by the magnetic moment vector and/or the position vector. The magnetic moment vector and/or the position vector may be used to determine a magnetic field change and/or a location change of the writing instrument assembly 10 during a writing operation. The magnetic moment vector may define a magnetic body orientation and/or a magnetic body strength, i.e., the magnetic field strength of the magnetic body 220. The magnetic body strength may be related to the magnetization of the magnetic body 220 and its volume. In an example, in case the magnetic adapter 200 comprises at least one additional magnetic body, the magnetic signature of the magnetic adapter 200 may be different than the magnetic signature of a magnetic adapter 200 comprising only magnetic body 220. Similarly, in case the magnetic body 220 comprises the first and at least one second tubular or ring-shaped magnetic bodies 220a, 220b, and which may comprise a shape so as to define different magnetic fields, the magnetic signature of the magnetic adapter 200 may be different as compared to a magnetic adapter 200 which comprises a magnetic body 220 in the form of a single permanent magnet.

The individual magnetic signature defined by the magnetic adapter 220 may be detected based on the magnetic field measurements. The processing unit 40 may be configured to identify writing instrument information and/or magnetic adapter information based on the magnetic signature. In other words, the magnetic signature defined by the magnetic body 220 may be indicative of writing instrument information related to the writing instrument 100 with which the magnetic adapter 200 is couplable and/or magnetic adapter information related to the magnetic adapter 200. Writing instrument information may include one or more of a type, a color, a nib type and a nib shape of the writing instrument 100. Magnetic adapter information may include one or more of location information of the magnetic body 220 relative to the magnetic adapter 200 and location information of the magnetic body 220 relative to the writing instrument 100 with which the magnetic adapter 200 is couplable. In examples, at least two magnetic adapters 200 (or writing instrument assemblies 10) may be operated within the sensing volume. Each of the magnetic adapters 200 may comprise an individual magnetic signature which may be indicative of individual writing instrument information and/or individual magnetic adapter information. The location determination, tracking, control, and/or representation of a virtual reproduction of the individual magnetic adapter may be based on the individual magnetic signature and associated individual writing instrument information and/or individual magnetic adapter information. The detection, identification, control and/or representation is described in accordance with the system 1 and method in detail below.

In some embodiments, e.g., as shown in Figs. 3A, 4A, 5A, the magnetic adapter 200 may be coupled with the writing instrument 100 such that the magnetic moment vector 222 extends through the nib 150. The magnetic moment vector 222 may extend in the direction of the nib 150, i.e., the magnetic body 220 may be configured such that the magnetic moment vector 222 points towards the nib 150. More specifically, the magnetic body 220 may be arranged in the magnetic adapter 200, such that, when coupled, the magnetic moment vector 222 may extend through a contact point or surface of the nib 150, e.g., a point or surface which is representative (i.e., from which the location may be determined) of a writing contact position such as a center of the nib 150. Thereby, accuracy during location determination and/or tracking of the writing instrument assembly 10 may be increased during writing operation. The contact point or surface of the nib 150 may be the point or surface which is mainly in contact with a writing surface or writing support surface during a writing operation. In more detail, the contact point or surface of the nib 150 may be substantially invariant in different 3D locations of the writing instrument 100 on the writing surface, e.g., when the writing instrument 100 tilted in different directions and/or with different tilting angles, or rotated while touching the writing surface. Additionally or alternatively, the contact point or surface may be substantially invariant in term of height when the writing instrument assembly 10 is tilted in different directions and/or with different tilting angles while touching the writing surface or writing support surface. This definition may particularly refer to the case when the nib 150 is not worn. In some embodiments, the contact point or surface may be the most distal point or surface of the nib 150.

Referring to Figs. 3A, 3B, 4A, 4B, 5A and 5B, the body 110 may include a first body portion 110a comprising the writing orifice 120 and the distal end 111, and a second body portion 110b comprising the proximal end 112. The first body portion 110a may be removably coupled with the second body portion 110b. The first and second body portions 110a, 110b may be configured to facilitate removal of the nib 150. In embodiments, the reservoir 140 may be part of body 110, e.g., of the second body portion 110b. In the embodiments shown in the Figs., the reservoir 140 may be a separate component and/or may be releasably coupled with the body 110, e.g., for replacement. The reservoir 140 may be configured to store a writing ink or other liquid to be dispensed on the writing surface during a writing operation. In some embodiments, the reservoir 140 may comprise a filter, a tube or container which may be fillable (or filled) with writing ink (commonly known as a free-ink system). Based on capillary force, the writing ink may be transported to be nib 150. In some embodiments, the writing instrument 100 may be configured such that the reservoir 140 is refillable. The writing instrument assembly 10 may comprise a cap releasably couplable to the body 110 and/or magnetic adapter 200 at the distal end 111 thereof (not shown in the Figs.), to protect the nib 150 and/or magnetic adapter 200 when the writing instrument assembly 10 is not used. In some embodiments, not shown in the Figs., the magnetic adapter 200 may be in the form of a cap releasably couplable to the body 110 at the distal end 111 thereof.

Referring to Figs. 3A to 5B, the writing instrument 100 may comprise a coupling component 170 configured to establish fluid communication between the nib 150 and the reservoir 140. A distal end portion of the coupling component 170 may be coupled to the nib 150 and a proximal end portion of the coupling component 170 may be coupled to the reservoir 140. The coupling component 170 may be a capillary or feeder configured to supply or promote the flow of writing ink from the reservoir 140 to the nib 150. In other embodiments, the reservoir 140 may be directly coupled with the nib 150, i.e., the coupling component 170 may be omitted. In some embodiments (not shown), the reservoir 140 and the coupling component 170 may be designed as one-piece. In other embodiments, the nib 150 and the coupling component 170 may be designed as one-piece. In yet other embodiments, the reservoir 140, the coupling component 170 and the nib 150 may be designed as one-piece. In the embodiments illustrated in Figs. 3A, 3B, 4A, 4B, 5A and 5B, the reservoir 140 may comprise a fibrous and/or porous material. The nib 150 may comprise fibrous and/or porous material. The coupling component 170 may comprise a fibrous and/or porous material, wherein the coupling component 170 may be configured to transport ink (e.g., by wicking and/or capillary force) from the reservoir 140 to the nib 150. In some embodiments, the material of the reservoir 140, the nib 150 and/or the coupling component 170 may be the same or may differ, e.g., in terms of porosity (or pore volume). As an example, the nib 150 may comprise a first material having a first porosity and the coupling component 170 may comprise a second material comprising a second porosity. The porosity of the first material may be lower than the porosity of the second material. The material used may be sintered plastics, fiber, foam or membranes. In general, materials with a capillary/porous network (open porosity) can be used. The material may be configured to allow for ink flow in the writing instrument 100, more specifically, the material may be configured (and may comprise a porosity adapted) to transport writing ink from the reservoir 140 to the nib 150 via the coupling component 170. In some embodiments, an extruded or sintered material may be used. In some embodiments, the coupling component 170, the reservoir 140 and/or the nib 150 may comprise a sintered porous material. In some embodiments, the material may be Polyethylene (PE), Polypropylene (PP), Polyamide (Nylon) or (thermoplastic) elastomers. Additionally or alternatively, the material may comprise a fiber-based or fibrous material and may comprise polyester, Poly(methyl methacrylate) (acrylic), or Nylon, and/or a non-woven material like polyester felt or wool felt. The porosity (pore volume) and/or pore size of the material may be adapted to the physical-chemical properties of the ink used for the writing instrument 100. In case a sintered porous material is used, the pore size may range from 5 to 300 microns. The pore volume may be from 25% to 60%, more specifically from 28% to 40%, in particular from 30% to 35%. In an example, the second coupling component 130 may comprise a sintered porous material in the form of Polyethylene (PE) with a pore volume of 25% to 60%, more specifically from 28% to 40%, in particular from 30% to 35%. In case a fiber-based or fibrous material is used, the pore volume may be from 40% to 80%, more specifically from 50% to 75%.

Referring to Figs. 3A to 5D, the first coupling arrangement 230 may comprise a first stop face 230b at a proximal end 212 of the supporting structure 210 extending substantially perpendicular to a supporting structure longitudinal axis a. The first stop face 230b may be configured to bear against a second stop face 130b of the second coupling arrangement 130 when the magnetic adapter 200 is coupled with the writing instrument 100. The second stop face 130b may face distally and the distal end portion 113 may extend from the second stop face 130b. The second stop face 130b may extend substantially perpendicular to the body longitudinal axis x. The second stop face 130b may also be configured to bear against the first stop face 230b of the first coupling arrangement 230 when the writing instrument 100 is coupled with the magnetic adapter 200. The first coupling arrangement 230 may comprise a first locking portion 230a arranged on an inner circumference of the supporting structure 210. The first locking portion 230a may be configured to be releasably coupled with a second locking portion 130a of the second coupling arrangement 130 when the magnetic adapter 200 is coupled with the writing instrument 100. The first locking portion 230a may be coupled with the second locking portion 130a by non-positively locking, positively locking and/or friction-locking. The second locking portion 130a may be arranged on an outer circumference of the body 110, more specifically on the distal end portion 113 of the body 110 of the writing instrument 100. In an embodiment, the first locking portion 230a may additionally or alternatively be arranged at the first stop face 230b, e.g. as an adhesive or Velcro fastener configured to couple with an adhesive or Velcro fastener arranged at the second stop face 130b. In some embodiments as shown in the Figs., the first locking portion 230a may comprise an internal thread configured to be screwed to an external thread of the second locking portion 130a. In other words, the second locking portion 130a may comprise an external thread configured to be screwed to an internal thread of the first locking portion 230a. Additionally or alternatively, the first locking portion 230a may be configured to be clipped to the second locking portion 130a, or vice versa. In some embodiments, the first locking portion 230a may comprise a protuberance or a recess configured to be coupled with a respective other one of a recess or a protuberance of the second locking portion 130a. The protuberance or recess may be arranged on a portion of the inner circumference of the supporting structure 210, e.g., as a circumferential groove or protuberance. In some embodiments, which may be combined with all above embodiments, the first locking portion 230a and/or the second locking portion 130a may be configured such that, when the first locking portion 230a is coupled with the second locking portion 130a, the first locking portion 230a and the second locking portion 130a form a press-fit therebetween. Additionally or alternatively, the first locking portion 230a may comprise an adhesive configured to couple with the second locking portion 130a. Any combination of the above locking mechanisms may be provided.

Referring to Figs. 3C, 4C and 5C, the tubular supporting structure 210 may comprise a stepped inner circumference. The stepped inner circumference may comprise a first diameter portion having a first diameter ID1 and a second diameter portion having a second diameter ID2, wherein at least one shoulder may be provided between the first diameter portion and the second diameter portion. The first diameter portion may be arranged between the distal end 211 of the supporting structure 210 and the at least one shoulder. The second diameter portion may be arranged between a proximal end 211 of the supporting structure 210 and the at least one shoulder, wherein the first diameter ID1 is smaller than the second diameter ID2. When the magnetic adapter 200 is coupled with the writing instrument 100, the first diameter portion may be located closer to the distal end 211 of the writing instrument 100 than the second diameter portion.

In some embodiments, the magnetic body 220 may be arranged in the second diameter portion, e.g., by press fit and/or axially clamped when coupled, and may bear against the at least one shoulder. An inner diameter AD1 of the magnetic body 220 may be larger than the first diameter ID1. The first diameter portion may comprise the first locking portion 230a. In this case, the magnetic body 220 may be arranged between the proximal end 212 of the supporting structure 210 and the at least one shoulder. A length of the magnetic body 220 which may be tubular or ring-shaped may be equal to or smaller than a length of the second diameter portion.

As shown in Figs. 3B, 4B and 5B, the body 110, more specifically the distal end portion 113, may comprise a stepped outer circumference. The stepped outer circumference may comprise a first outer diameter portion having a first outer diameter WD1 and a second outer diameter portion having a second outer diameter WD2. At least one outer shoulder may be provided between the first outer diameter portion and the second outer diameter portion. The first outer diameter portion may be arranged between the distal end 111 of the body 110 and the at least one outer shoulder. The second outer diameter portion may be arranged between the second stop face 130b of the second coupling arrangement 130 facing distally and the at least one outer shoulder. The first outer diameter WD1 may be smaller than the second outer diameter WD2. As mentioned above, the magnetic body 220 may be tubular or ring-shaped and the magnetic body 220 may be arranged in the tubular supporting structure 210 such that, when the writing instrument 100 is coupled with the magnetic adapter 200, the proximal end 212 of the magnetic adapter 200 bears against the at least one outer shoulder or against the second stop face 130b. When the writing instrument 100 is coupled with the magnetic adapter 200, an inner circumference of the tubular or ring-shaped magnetic body 220 may face an outer circumference of the first outer diameter portion or second outer diameter portion.

In some embodiments, e.g., as shown in Figs. 4A to 5D, the second outer diameter portion may comprise the second locking portion 130a. The first outer diameter portion may be configured to receive the first diameter portion of the magnetic adapter 200 to provide a guide and/or radial bearing. Alternatively, the first outer diameter portion may comprise the second locking portion 130a. The second outer diameter portion may be configured to provide the guide and/or radial bearing for the second diameter portion of the magnetic adapter 200.

In some embodiments, e.g., as shown in Figs. 3C, 4C and 5C, the stepped inner circumference may comprise a third diameter portion having a third diameter ID3 arranged between the first diameter portion and the second diameter portion. A first shoulder may be arranged between the first diameter portion and the third diameter portion. A second shoulder may be arranged between the third diameter portion and the second diameter portion. The first diameter ID1 may be smaller than the third diameter ID3. The third diameter ID3 may be smaller than the second diameter ID2.

Referring to Figs. 3A to 3C, the magnetic body 220 may be arranged in the second diameter portion, e.g., by press fit and/or axially clamped when coupled, and may bear against the second shoulder. In other embodiments (not shown), the magnetic body may be arranged in first diameter portion. An inner diameter AD1 of the magnetic body 220 may be equal to or larger than the third diameter ID3. The third diameter portion may comprise the first locking portion 230a. The first diameter portion may be configured to receive the distal end portion 113 of the writing instrument 100 to provide a radial bearing. The first diameter portion may be configured to bear against an outer circumference of the distal end portion 113 or a part thereof, more specifically to provide a radial bearing and a guide for translation of the magnetic adapter 200 on the writing instrument 100 during coupling. The stepped outer circumference may comprise a third outer diameter portion having a third outer diameter WD3 arranged between the first outer diameter portion and the second outer diameter portion. The first outer shoulder may be arranged between the first outer diameter portion and the third outer diameter portion. A second outer shoulder may be arranged between the third outer diameter portion and the second outer diameter portion. The first outer diameter WD1 may be smaller than the third outer diameter WD3. The third outer diameter WD3 may be smaller than the second outer diameter WD2.

The third outer diameter portion comprising the second locking portion 130a may be configured to receive the third diameter portion comprising the first locking portion 230a of the magnetic adapter 200. The first outer diameter portion and/or the second outer diameter portion may be configured to provide a guide and/or radial bearing for the first diameter portion and/or a second diameter portion of the magnetic adapter 200.

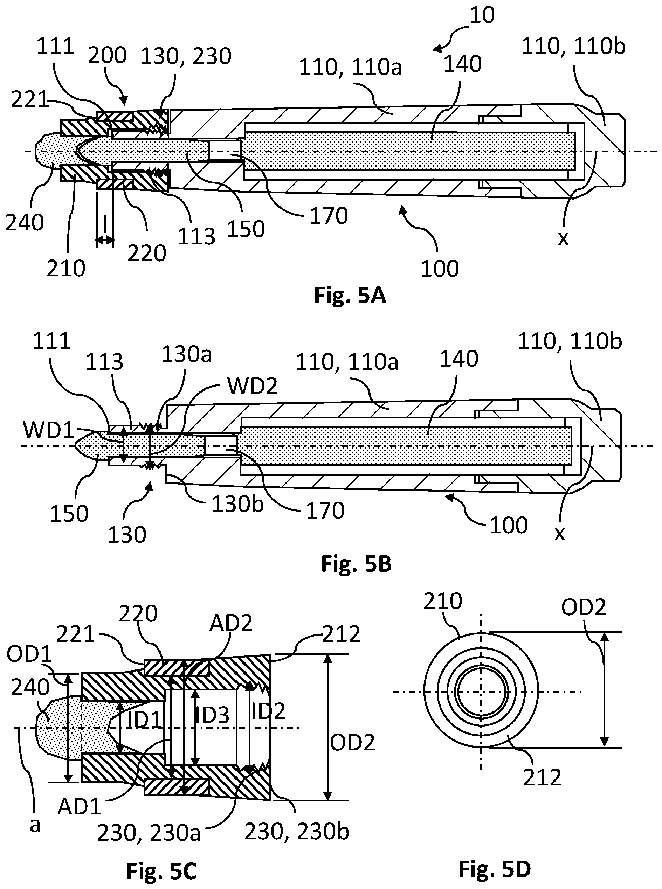

An axial length, measured along the supporting structure longitudinal axis a, of the first diameter portion, the second diameter portion and the third diameter portion may be equal. In some embodiments, the axial length of the second diameter portion may be larger than the axial length of the first diameter and/or second diameter portion (see, e.g., Fig. 3C). In some embodiments, the axial length of the third diameter portion may be substantially equal to or larger than the axial length of the first diameter portion and/or the second diameter portion (see, e.g., Fig. 4C). In some embodiments, the axial length of the first diameter portion may be substantially equal to or larger than the axial length of the second diameter portion and/or third diameter portion (see, e.g., Fig. 5C). The respective axial lengths may be adapted such that sufficient length is available for the radial bearing, first coupling arrangement 230 and/or second coupling arrangement 130.

In some embodiments, e.g., as shown in Figs. 4A to 4D, the magnetic body 220 may be arranged in the third diameter portion, e.g., by press fit and/or axially clamped when coupled, and may bear against the first shoulder. An inner diameter AD1 of the tubular or ring-shaped magnetic body 220 may be equal to or larger than the first diameter ID1. The second diameter portion may comprise the first locking portion 230a. The first diameter portion may configured to receive the distal end portion 113, or a part thereof, of the body 110 to provide a radial bearing. In some embodiments, as shown in Figs. 5A to 5D, the magnetic body 220 may be coupled to an outer circumference of or may be integrated in, the supporting structure 210. The second diameter portion may comprise the first locking portion 230a. The third diameter portion may be configured to receive the distal end portion 113, or a part thereof, of the body 110 to provide a radial bearing. A second outer diameter AD2 of the magnetic body 220 may be equal to or smaller than a diameter of an outer circumference of the tubular supporting structure 210, thereby increasing ergonomics. In embodiments, only the first diameter portion and the second diameter portion may be provided.

As shown in Figs. 5A and 5C, in some embodiments, the magnetic adapter 200 may comprise a magnetic adapter nib 240. The magnetic adapter nib 240 may be configured for fluid communication with a nib 150 of the writing instrument 100 when the magnetic adapter 200 is coupled with the writing instrument 100. The magnetic adapter nib 240 may be coupled with the first diameter portion and may protrude beyond the distal end 211 of the supporting structure 210. In this embodiment, the magnetic adapter 200 may comprise an adapter writing orifice at the distal end 211. More specifically, the first diameter portion may comprise the adapter writing orifice and the adapter nib may protrude through the adapter writing orifice. The magnetic adapter nib 240 may comprise a material as described above for the nib 150 of the writing instrument. In some embodiments, the porosity of the material of the magnetic adapter nib 240 may be different from the porosity of the material of the nib 150.

Referring back to the embodiments shown in Figs. 2 to 5D, the tubular supporting structure 210 may taper from the proximal end 212 towards the distal end 211, particularly since the writing adapter may be configured as writing instrument tip. In other words, the tubular supporting structure 210 may taper from an outer diameter OD2 at the proximal end 212 to an outer diameter OD1 at the distal end 211. The outer diameter OD2 of the supporting structure 210 at the proximal end 212 may be configured such that, when the magnetic adapter 200 is coupled with the writing instrument 100, the outer diameter OD2 may be substantially equal to an outer diameter WD4 of a portion of an outer circumference of the writing instrument 100 adjacent the proximal end 212.

Methods for determining and/or tracking the location of a writing instrument assembly 10 with a magnetic body 220 based on magnetometer measurements within a sensing volume and associated algorithms are known in the prior art, for example as described in US 2020/116524 A1 or US 2015/057969 A1. The principles described herein for the magnetic body 220 may also apply to the at least one additional magnetic body. A method may comprise determining at least one magnetic body location within the sensing volume M created by the plurality of magnetometers 30 based on obtained magnetic field measurements. The method may comprise defining a reference coordinate system XYZ (i.e., the reference coordinate system as described above). Determining a magnetic body location may comprise determining an absolute magnetic body location indicative of a position and/or an orientation of the magnetic body relative to the reference coordinate system XYZ. The absolute magnetic body location may be determined based on implementing a mathematical model associating each measurement of the magnetometers 30 with a location of the magnetic body in the reference coordinate system XYZ. Each magnetometer of the plurality of magnetometers 30 may be a vector magnetometer and may be configured to measure the magnetic field in one, two or three dimensions. In an embodiment, a Coulomb model may be implemented, which may allow a modeling of complex magnetizations of the magnetic body 220. In examples, a Dipolar model, an Amperian model and/or mapping based on a Look-Up Table (LUT) may be implemented. In some embodiments, the method may comprise determining a writing instrument assembly location. Determining a writing instrument assembly location may comprise determining a relative magnetic body location indicative of a relative position and/or a relative orientation of the magnetic body 220 relative to the writing instrument 100 and/or writing instrument assembly 10, more specifically to a writing instrument (assembly) coordinate system. Determining a relative magnetic body location may be based on the absolute magnetic body location as described above and a predetermined and/or preconfigured location of the magnetic body 220 relative to the writing instrument 100, e.g., which may be defined by a set of geometric parameters. This information may be included in magnetic adapter information, which will be described in detail below. The set of geometric parameters may comprise predefined geometric parameters indicative of a geometric position and a geometric orientation of the magnetic body 220 relative to the writing instrument 100 and/or writing instrument assembly 10, more specifically relative to the nib 150, or contact point or surface, of the nib 150 (e.g., relative to a center of the nib 150). In other words, based on the determined absolute location of the magnetic body 220 and the knowledge of the arrangement of the magnetic body 220 relative to the writing instrument 100 and/or assembly 10, the writing instrument assembly location (as well as a location of the writing instrument 100) may be known. In addition, the location of the writing support 20, writing support surface (and/or writing surface) may be known. Based on the determined writing instrument (assembly) location and known location of the writing support 20 (and the surfaces), the location of the writing instrument assembly 10 may be determined and/or tracked relative to the writing support 20, writing support surface and/or writing surface. As indicated in Fig. 1, the writing support 20 may define a writing support coordinate system comprising a first writing support axis xₛ, a second writing support axis yₛ and a third writing support axis zₛ. The first and second writing support axes xₛ, yₛ may be perpendicular to each other and may be defined on the writing support surface of the writing support 20. The third writing support axis zₛ may be perpendicular to the first and second writing support axes. The writing surface may be parallel to the writing support surface. The location of the writing instrument assembly 10 may be determined and/or tracked relative to the writing support coordinate system.

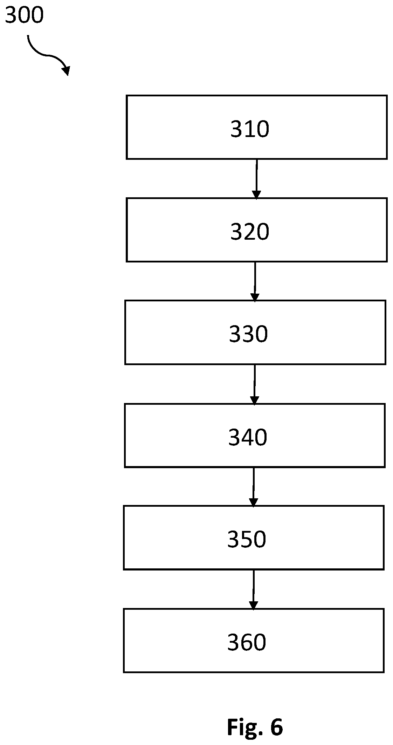

According to an aspect of the present disclosure, as shown in Fig. 6, a method 300 for determining and/or tracking a location of a writing instrument assembly 10 comprises:
a) obtaining magnetic field measurements 310 associated with a magnetic body 220 of a magnetic adapter 200 of a writing instrument assembly 10 according to the aspects of the present disclosure and measured with a plurality of magnetometers 30, and
b) determining and/or tracking a location (320) of the writing instrument assembly 10 based on the obtained magnetic field measurements.

In some embodiments, the method may further comprise:
c) detecting a magnetic signature (330) of the magnetic body 220 based on the obtained magnetic field measurements, and
d) identifying (340) writing instrument information and/or magnetic adapter information based on the magnetic signature.

The method steps may be carried out simultaneously or in a different order, e.g., detecting the magnetic signature and identifying the associated information may take place before location determination and/or tracking (or at the same time). Writing instrument information may be related to the writing instrument 100 with which the magnetic adapter 200 is couplable (or coupled) and/or wherein magnetic adapter information may be related to the magnetic adapter 200. As mentioned above, the magnetic signature may include one or more of a magnetic field strength of the magnetic body 220, a magnetic field shape of the magnetic body 220 and a magnetic field location of the magnetic body 220. The magnetic field shape may be indicative of a symmetry and/or deformation of the magnetic field. The magnetic field location may comprise a position and/or orientation (including a direction) of the magnetic field of the magnetic adapter 200. As already described, writing instrument information may include one or more of a type, a color, a nib type and a nib shape of the writing instrument 100. The types may include for example: eraser, pen, fountain pen, multicolor pen, highlighter, gel pen, ball point pen, spindle, etc. Magnetic adapter information may include one or more of location information of the magnetic body 220 relative to the magnetic adapter 200 and location information of the magnetic body 220 relative to the writing instrument 100 with which the magnetic adapter 200 is couplable (or coupled). In embodiments, the magnetic adapter information may be indicative of a distance between the magnetic body 220 and the nib 150 of the writing instrument 100 and/or magnetic adapter nib 240, based on which a contact of the nib 150 and/or magnetic adapter 240 with the writing support surface and/or writing surface may be detected. This information may be used to determine that the writing instrument assembly 10 is operated on the writing support surface and/or writing surface, e.g., that strokes are performed on the respective surfaces.

Additionally or alternatively, the magnetic adapter 200 and/or the writing instrument 100 may comprise at least one RFID tag attached to or embedded therein. The at least one RFID tag may comprise the described writing instrument information and/or magnetic adapter information. The system 10 may comprise at least one RFID reader configured to read the writing instrument information and/or magnetic adapter information included as digital data in the respective RFID tag. In an example, the magnetic adapter 200 may comprise at least one RFID tag attached to or embedded therein. In this case, the at least one RFID tag may comprise magnetic adapter information as described herein. The RFID reader may trigger the RFID tag to transmit magnetic adapter information which may be used by the methods and systems as described herein. In an example, the writing instrument 100 may comprise at least one RFID tag attached to or embedded therein. In this case, the at least one RFID tag may include writing instrument information, e.g. one or more of a type, a color, a nib type and a nib shape of the writing instrument 100 as described herein. The RFID reader may trigger the RFID tag to transmit writing instrument information which may be used by the methods and systems as described herein. In another example, only one RFID may be attached to or embedded in the magnetic adapter 200 or the writing instrument 100. This RFID may include both writing instrument information and magnetic adapter information. The RFID reader may be communicatively coupled with the processing unit 40.

In embodiments, as indicated in Fig. 6, the method may further comprise controlling a virtual reproduction 350 of the writing instrument assembly 10 and/or a writing operation of the writing instrument assembly 10 on a writing surface by a user based on the identified writing instrument information and/or magnetic adapter information. Controlling the virtual reproduction may comprise adapting and/or selecting at least one setting of the virtual reproduction based on the identified writing instrument information and/or magnetic adapter information. The setting may be a digital setting. The setting may comprise one or more of a color, shape, size, and type of the virtual reproduction of the writing instrument 100. In some embodiments, identifying writing instrument information and/or magnetic adapter information based on the detected magnetic signature may comprise accessing a database comprising a predefined data list which correlates writing instrument information and/or magnetic adapter information to the magnetic signature. In examples, a look-up table may be implemented. The method may comprise selecting writing instrument information and/or magnetic adapter information of the predefined data list based on a match of writing instrument information and/or magnetic adapter information with the magnetic signature. In examples, the predefined data list may comprise different types of writing instruments 100 (e.g., pen, fountain pen, multicolor pen, eraser, highlighter, etc.) and/or their respective characteristics (e.g., nib shape, variable nib sizes/thickness, different colors, etc.), associated with respective magnetic signatures. In an example, the magnetic adapter 200 comprising the magnetic body 220 (and in some embodiments at least one additional magnetic body) may define an individual magnetic signature which may be linked to a specific type of writing instrument and/or respective characteristics. For example, the magnetic field strength may be linked to the type of writing instrument 100 and the magnetic field shape may be linked to a specific nib size/shape and/or color of the writing instrument 100. The magnetic adapter information may be linked to a certain location of the magnetic adapter relative to the writing instrument 100. Based on the magnetic signature, the associated writing instrument information and/or magnetic adapter information can be identified. Writing instrument information and/or magnetic adapter information may then be used for adapting and/or selecting the at least one setting of the virtual reproduction. Consequently, the resulting effect on the virtual reproduction of the writing instrument assembly 10 operated on a "virtual" paper (e.g., the writing support surface or writing surface being implemented as a virtual writing surface) may be dependent on writing instrument information, magnetic adapter information (and/or magnetic signature). This may include providing at least one of a substantially different line, effect, drawing compared to the other type. In the example as described above, at least two magnetic adapters 200 (or writing instrument assemblies 10) may be operated within the sensing volume. Each of the magnetic adapters 200 may comprise an individual magnetic signature which may be indicative of individual writing instrument information and/or individual magnetic adapter information. The location determination, tracking, control, and/or representation of a virtual reproduction of the individual magnetic adapter may be based on the individual magnetic signature and associated individual writing instrument information and/or individual magnetic adapter information. As first magnetic adapter may comprise the magnetic body 220. At least one second magnetic adapter may comprise at least one second magnetic body. The magnetic body 220 may be configured to define a first magnetic signature and the at least one second magnetic body may be configured to define a second magnetic signature, the first magnetic signature being different from the second magnetic signature. The method described may identify first writing instrument information and/or first adapter information based on the first magnetic signature. The method described may identify second writing instrument information and/or second adapter information based on the second magnetic signature. In case a user replaces the first magnetic adapter with the at least one second magnetic adapter and couples it with the writing instrument 100, the method described may identify the second writing instrument information and/or second adapter information, which may be different than the first writing instrument information and/or first magnetic adapter information. Accordingly, the virtual representation based on the second writing instrument information and/or second magnetic adapter information may be different from the virtual representation based on the first writing instrument information and/or first magnetic adapter information.

In embodiments, the method may comprise controlling the virtual reproduction based on the determined and/or tracked location of the writing instrument assembly 10. The method may further comprise representing 360 the controlled virtual reproduction on at least one output device 50. The representation and/or movement of the virtual reproduction on the at least one output device 50 may be based on one or more of the writing instrument information, magnetic adapter information and the determined and/or tracked location of the writing instrument 100 relative to the writing support, writing support surface and/or writing surface. The method described may be a computer-implemented method. The system 1 described herein may be configured to execute the computer-implemented method. The method may be configured for identifying a magnetic adapter 200, a writing instrument 100 and/or associated writing instrument assembly 10. In some embodiments, the method may be configured to control a representation of the magnetic adapter 200 and/or writing instrument assembly 10 operation by a user, and may be configured to control a virtual reproduction of the magnetic adapter 200 and/or writing instrument assembly operation of the writing instrument 100 on the writing surface.

In embodiments, the method may further comprise applying a filter for filtering the determined magnetic body location and/or the writing instrument (assembly) location. Magnetic and electronic noise, as well as environmental variations may lead to non-smooth location determinations over time. Based on the filtering, a smooth location trajectory of the magnetic body 220 may be achieved. For filtering, optimization algorithms or recursive Bayesian estimation such as a Kalman filter may be applied, more specifically an extended Kalman filter or an unscented Kalman filter. In some embodiments, a low-pass filter may be used in combination with a Kalman filter. In embodiments, the magnetic body 220 may be tracked over a time period comprising multiple time samples. At each time sample, the method may comprise determining the magnetic body location. The method may further comprise storing the determined and/or detected features for each time sample. Furthermore, the method may be configured to take into account (more specifically to remove) external magnetic fields, e.g. the earth magnetic field. As mentioned above, the method may be a computer-implemented method. In some embodiments, the processing unit(s) 40 of or coupled with the system 1 may be configured to execute the computer-implemented method. A computer system may be configured to execute the computer-implemented method as described above. A computer program may be configured to execute the computer-implemented method as described above. Furthermore, a computer-readable medium or signal storing the computer program may be provided. The above-described computer-implemented method can comprise or be executable via a computer or a network of computers, the computer or network of computers comprising at least one processing unit (e.g., a processor, and/or the processing unit(s) 40 as described above) and at least one data storage (i.e., memory). The procedural logic described may be held in the form of executable code in at least one data storage and executed by the at least one processing unit. In examples, the computer-implemented method may be executed on an embedded system comprising at least one microprocessor such as a microcontroller (MCU) or a digital signal processing (DSP) processor. The system 1 may send data to the at least one processing unit and, in examples, they may also receive instructions from the at least one processing unit. The processing unit may thereby direct user-initiated and/or automatically generated queries to the system 1. The system 1 is not limited to a particular hardware environment. Thus, distributed devices coupled via a network may perform the techniques described herein. The disclosure also includes electrical signals and computer-readable media defining instructions that, when executed by a processing unit, implement the techniques described herein. The system 1 may comprise at least one database. Alternatively, or in addition, the system 1 may access a database in a cloud (via a communication interface). The system 1 may comprise at least one communication interface to couple the processing unit(s) 40 and/or the database. The communication interface may comprise one or more of a network, internet, a local area network, a wireless local area network, a broadband cellular network, and/or a wired network. In examples, the system 1 may couple to one or more features via a server hosted in a cloud. The processing unit(s) 40 mentioned above may be communicatively coupled with other processing units external to the system 1.

Although the above principles have been described for the system 1, writing instrument assembly 10, magnetic adapter 200 and writing instrument 100, multiple writing instruments assemblies 10 and/or magnetic adapters 200 may be provided. In an example, the system 1 may comprise a plurality of writing instrument assemblies 10 and/or magnetic adapters 200 operated (e.g., manipulated by a user U) within the sensing volume M created by the magnetometer(s). Although the above principles have been described for a magnetic body 220 of the magnetic adapter 200, the at least one additional magnetic body may be provided and the above principles may also apply to these additional magnetic bodies. In some examples, the writing instrument 100 may comprise the at least one additional magnetic body. The system and method disclosed herein may be configured to determine and/or track location of the at least one additional magnetic body according to the principles described herein.

Although the present invention has been described above and is defined in the attached claims, it should be understood that the invention may alternatively be defined in accordance with the following embodiments:
1. A magnetic adapter (200) for a writing instrument (100), comprising:
   a tubular supporting structure (210) configured to receive at least a portion of a writing instrument body (110) of the writing instrument (100) therein, wherein the body (110) of the writing instrument (100) comprises a longitudinal axis (x), and
   a magnetic body (220) coupled to the tubular supporting structure (210),
   wherein the tubular supporting structure (210) comprises a first coupling arrangement (230),
   wherein the first coupling arrangement (230) is configured to be releasably coupled with a second coupling arrangement (130) of the writing instrument (100) such that an axial position of the magnetic adapter (200) relative to the writing instrument (100) along the longitudinal axis (x) is fixed when coupled.
2. The magnetic adapter (200) according to embodiment 1, wherein a distance (l) along the longitudinal axis (x) between a distal end (111) of the writing instrument (100) and the magnetic body (220) is fixed when coupled.
3. The magnetic adapter (200) according to embodiment 1 or embodiment 2, wherein the magnetic adapter (200) is configured as a writing instrument tip component, and wherein the magnetic adapter (200) is configured to be coupled with a distal end portion (113) of the writing instrument (100).
4. The magnetic adapter (200) according to any one of the preceding embodiments, wherein the magnetic adapter (200) is electrically and/or electronically passive.
5. The magnetic adapter (200) according to any one of the preceding embodiments, wherein the magnetic body (220) is ring-shaped and comprises a magnetic body longitudinal axis (m) extending along a length of the magnetic body, wherein the magnetic body (220) is coupled with the tubular supporting structure (210) such that the magnetic body longitudinal axis (m) extends coaxially with a supporting structure longitudinal axis (a).
6. The magnetic adapter (200) according to any one of the preceding embodiments, wherein the magnetic body (220) is configured to generate a magnetic field, and wherein the magnetic body (220) defines a magnetic moment vector (222), wherein the magnetic moment vector (222) is substantially coaxial with a magnetic body longitudinal axis (m).
7. The magnetic adapter (200) according to embodiment 6, wherein the magnetic moment vector (222) is substantially coaxial with a supporting structure longitudinal axis (a).
8. The magnetic adapter (200) according to embodiment 6 or embodiment 7, wherein the magnetic body (220) comprises a first ring-shaped magnetic body (220a) and at least one second ring-shaped magnetic body (220b) coupled with the first ring-shaped magnetic body (220a), optionally wherein each of the first and second ring-shaped magnetic bodies (220a, 220b) is configured to generate a magnetic field and wherein the first and second ring-shaped magnetic bodies (220a, 220b) together define the magnetic moment vector (222), more specifically wherein the first and second ring-shaped magnetic bodies (220a, 220b) are firmly coupled and rotationally oriented relative to each other such that the magnetic moment vector (222) is substantially coaxial with the magnetic body longitudinal axis (m).
9. The magnetic adapter (200) according to any one of the preceding embodiments, wherein the magnetic body (220) comprises a permanent magnet.
10. The magnetic adapter (200) according to any one of the preceding embodiments, wherein the magnetic body (220) of the magnetic adapter (200) is configured to define a magnetic signature which is indicative of writing instrument information related to the writing instrument (100) with which the magnetic adapter (200) is couplable and/or magnetic adapter information related to the magnetic adapter (200), wherein the magnetic signature is detectable based on a magnetic field measurements associated with the magnetic body (220) with a plurality of magnetometers (30).
11. The magnetic adapter (200) according to embodiment 10, wherein the magnetic signature includes one or more of a magnetic field strength of the magnetic body (220), a magnetic field shape of the magnetic body (220) and a magnetic field location of the magnetic body (220), optionally wherein writing instrument information includes one or more of a type, a color, a nib type and a nib shape of the writing instrument (100) and/or wherein magnetic adapter information includes one or more of location information of the magnetic body (220) relative to the magnetic adapter (200) and location information of the magnetic body (220) relative to the writing instrument (100) with which the magnetic adapter (200) is couplable.
12. The magnetic adapter (200) according to any one of the preceding embodiments, wherein the magnetic body (220) is fixedly coupled to the tubular supporting structure (210), optionally to an inner circumference of the supporting structure (210).
13. The magnetic adapter (200) according to any one of the preceding embodiments, wherein the first coupling arrangement (230) comprises a first stop face (230b) at a proximal end (212) of the supporting structure (210) extending substantially perpendicular to a supporting structure longitudinal axis (a), wherein the first stop face (230b) is configured to bear against a second stop face (130b) of the second coupling arrangement (130) when the magnetic adapter (200) is coupled with the writing instrument (100).
14. The magnetic adapter (200) according to any one of the preceding embodiments, wherein the first coupling arrangement (230) comprises a first locking portion (230a) arranged on an inner circumference of the supporting structure (210), wherein the first locking portion (230a) is configured to be releasably coupled with a second locking portion (130a) of the second coupling arrangement (130) when the magnetic adapter (200) is coupled with the writing instrument (100).
15. The magnetic adapter (200) according to embodiment 13 or embodiment 14, wherein the first locking portion (230a) comprises an internal thread configured to be screwed to an external thread of the second locking portion (130a).
16. The magnetic adapter (200) according to embodiment 9 or embodiment 10, wherein the first locking portion (230a) is configured to be clipped to the second locking portion (130a), optionally wherein the first locking portion (230a) comprises a protuberance or a recess configured to be coupled with a respective other one of a recess or a protuberance of the second locking portion (130a).
17. The magnetic adapter (200) according to any one of embodiments 14 to 16, wherein the first locking portion (230a) is configured such that, when the first locking portion (230a) is coupled with the second locking portion (130a), the first locking portion (230a) and the second locking portion (130a) form a press-fit therebetween.
18. The magnetic adapter (200) according to any one of the preceding embodiments, wherein the tubular supporting structure (210) comprises a stepped inner circumference, wherein the stepped inner circumference comprises a first diameter portion having a first diameter (ID1) and a second diameter portion having a second diameter (ID2), wherein at least one shoulder is provided between the first diameter portion and the second diameter portion.
19. The magnetic adapter (200) according to embodiment 18, wherein the first diameter portion is arranged between a distal end (211) of the supporting structure (210) and the at least one shoulder, and wherein the second diameter portion is arranged between a proximal end (211) of the supporting structure (210) and the at least one shoulder, wherein the first diameter (ID1) is smaller than the second diameter (ID2).
20. The magnetic adapter (200) according to embodiment 13 or embodiment 14, wherein the stepped inner circumference comprises a third diameter portion having a third diameter (ID3) arranged between the first diameter portion and the second diameter portion, wherein a first shoulder is arranged between the first diameter portion and the third diameter portion and wherein as second shoulder is arranged between the third diameter portion and the second diameter portion, wherein the first diameter (ID1) is smaller than the third diameter (ID3), and wherein the third diameter (ID3) is smaller than the second diameter (ID2).
21. The magnetic adapter (200) according to any one of embodiments 18 to 20, wherein the magnetic body (220) is arranged in the second diameter portion and bears against the at least one shoulder, wherein an inner diameter (AD1) of the magnetic body is larger than the first diameter (ID1), and wherein the first diameter portion comprises the first locking portion (230a).
22. The magnetic adapter (200) according to embodiment 21, wherein the magnetic body (220) is arranged in the second diameter portion and bears against the second shoulder, wherein an inner diameter (AD1) of the ring-shaped magnetic body is equal to or larger than the third diameter (ID3), and wherein the third diameter portion comprises the first locking portion (230a), more specifically wherein the first diameter portion is configured to receive a distal end portion (113) of the writing instrument (100) to provide a radial bearing.
23. The magnetic adapter (200) according to embodiment 20, wherein the magnetic body (220) is arranged in the third diameter portion and bears against the first shoulder, wherein an inner diameter (AD1) of the ring-shaped magnetic body is equal to or larger than the first diameter (ID1), and wherein the second diameter portion comprises the first locking portion (230a), more specifically wherein the first diameter portion is configured to receive a distal end portion (113) of the writing instrument (100) to provide a radial bearing.
24. The magnetic adapter (200) according to embodiment 20, wherein the magnetic body (220) is coupled to an outer circumference of the supporting structure (210), wherein the second diameter portion comprises the first locking portion (230a), more specifically wherein the third diameter portion is configured to receive a distal end portion (113) of the writing instrument (100) to provide a radial bearing.
25. The magnetic adapter (200) according to any one of embodiments 18 to 24, wherein the magnetic adapter (200) comprises a magnetic adapter nib (240) wherein the magnetic adapter nib (240) is configured for fluid communication with a nib (150) of the writing instrument (100) when the magnetic adapter (200) is coupled with the writing instrument (100), more specifically wherein the magnetic adapter nib (240) is coupled with the first diameter portion and protrudes beyond a distal end (211) of the supporting structure.
26. The magnetic adapter (200) according to any one of the preceding embodiments, wherein the supporting structure (210) comprises a proximal end (212) and a distal end (211), wherein the tubular supporting structure tapers from the proximal end (212) towards the distal end (211).
27. The magnetic adapter (200) according to any one of the preceding embodiments, wherein an outer diameter (OD2) of the supporting structure (210) at the proximal end (212) is configured such that, when the magnetic adapter (200) is coupled with the writing instrument (100), the outer diameter (OD2) is substantially equal to an outer diameter (WD4) of a portion of an outer circumference of the writing instrument (100) adjacent the proximal end (212).
28. A writing instrument (100), comprising:
   a writing instrument body (110) configured to be at least partially received within a tubular supporting structure (210) of a magnetic adapter (200), wherein the magnetic adapter (200) comprises a magnetic body (220) coupled to the tubular supporting structure (210),
   wherein the body (110) comprises a longitudinal axis (x) and a second coupling arrangement (130),
   wherein the second coupling arrangement (130) is configured to be releasably coupled with a first coupling arrangement (230) of the magnetic adapter (200) such that an axial position of the magnetic adapter (200) relative to the writing instrument (100) along the longitudinal axis (x) is fixed when coupled.
29. The writing instrument (100) according to embodiment 28, wherein the writing instrument comprises an ink system and a writing orifice (120) at a distal end (111) of the body (110).
30. The writing instrument (100) according to embodiment 29, wherein the ink system comprises a reservoir (140) for storing a writing ink arranged proximally to the writing orifice (120), a nib (150) arranged distally to the reservoir (140) and in fluid communication with the reservoir (140), wherein the nib (150) extends along the body longitudinal axis (x) and comprises a distal end portion (151) protruding through the writing orifice (120).
31. The writing instrument (100) according to embodiment 29 or embodiment 30, wherein the body (110) comprises a distal end portion (113) including the distal end (111), wherein the distal end portion (113) is configured to be at least partially received within the tubular structure (210) of the magnetic adapter (200).
32. The writing instrument (100) according to any one of embodiments 28 to 31, wherein a distance (l) along the longitudinal axis (x) between a distal end (111) of the writing instrument (100) and the magnetic body (220) is fixed when coupled.
33. The writing instrument (100) according to embodiment 31 or embodiment 32, wherein the magnetic adapter (200) is configured as a writing instrument tip component, and wherein the distal end portion (113) is configured to be coupled with the magnetic adapter (200).
34. The writing instrument (100) according to any one of embodiments 28 to 33, wherein the writing instrument (100) is electrically and/or electronically passive.
35. The writing instrument (100) according to any one of embodiments 28 to 34, wherein the second coupling arrangement (130) comprises a second stop face (130b) facing distally, more specifically from which a distal end portion (113) extends, wherein the second stop face (130b) extends substantially perpendicular to the body longitudinal axis (x), wherein the second stop face (130b) is configured to bear against a first stop face (230b) of the first coupling arrangement (230) when the writing instrument (100) is coupled with the magnetic adapter (200).
36. The writing instrument (100) according to any one of embodiments 28 to 35, wherein the second coupling arrangement (130) comprises a second locking portion (130a) arranged on an outer circumference of the body (110), more specifically on a distal end portion (113) of the writing instrument (100), wherein the second locking portion (130a) is configured to be releasably coupled with a first locking portion (230a) of the first coupling arrangement (230) when the writing instrument (100) is coupled with the magnetic adapter (200).
37. The writing instrument (100) according to embodiment 36, wherein the second locking portion (130a) comprises an external thread configured to be screwed to an internal thread of the first locking portion (230a).
38. The writing instrument (100) according to embodiment 36 or embodiment 37, wherein the second locking portion (130a) is configured to be clipped to the first locking portion (230a), more specifically wherein the second locking portion (130a) comprises a protuberance or a recess configured to be coupled with a respective other one of a recess or a protuberance of the first locking portion (230a).
39. The writing instrument (100) according to any one of embodiments 36 to 38, wherein the second locking portion (130a) is configured such that, when the second locking portion (130a) is coupled with the first locking portion (230a), the second locking portion (130a) and the first locking portion (230a) form a press-fit therebetween.
40. The writing instrument (100) according to any one of embodiments 29 to 39, wherein the body (110), more specifically the distal end portion (113), comprises a stepped outer circumference, wherein the stepped outer circumference comprises a first outer diameter portion having a first outer diameter (WD1) and a second outer diameter portion having a second outer diameter (WD2), wherein at least one outer shoulder is provided between the first outer diameter portion and the second outer diameter portion.
41. The writing instrument (100) according to embodiment 40, wherein the first outer diameter portion is arranged between a distal end (111) of the body (110), more specifically of the distal end portion (113), and the at least one outer shoulder and wherein the second outer diameter portion is arranged between a second stop face (130b) of the second coupling arrangement (130) facing distally and the at least one outer shoulder, wherein the first outer diameter (WD1) is smaller than the second outer diameter (WD2).
42. The writing instrument (100) according to embodiment 41, wherein the second outer diameter portion comprises the second locking portion (130a) and wherein the first outer diameter portion is configured to receive a first diameter portion of the magnetic adapter (200) to provide a guide and/or a radial bearing, or,
   wherein the first outer diameter portion comprises the second locking portion (130a) and wherein the second outer diameter portion is configured to provide a guide and/or a radial bearing for a second diameter portion of the magnetic adapter (200).
43. The writing instrument (100) according to any one of embodiments 40 to 42, wherein the stepped outer circumference comprises a third outer diameter portion having a third outer diameter (WD3) arranged between the first outer diameter portion and the second outer diameter portion, wherein a first outer shoulder is arranged between the first outer diameter portion and the third outer diameter portion and wherein a second outer shoulder is arranged between the third outer diameter portion and the second outer diameter portion, wherein the first outer diameter (WD1) is smaller than the third outer diameter (WD3), and wherein the third outer diameter (WD3) is smaller than the second outer diameter (WD2).
44. The writing instrument (100) according to any one of embodiments 41 to 43, wherein the magnetic body (220) is ring-shaped and has a proximal end, wherein the magnetic body (220) is arranged in the tubular structure (210) such that, when the writing instrument (100) is coupled with the magnetic adapter (200), the proximal end bears against the at least one outer shoulder or against the second stop face (130b).
45. The writing instrument (100) according to embodiment 43 or embodiment 44, wherein the third outer diameter portion comprises the second locking portion (130a) and is configured to receive a third diameter portion comprising the first locking portion (230a) of the magnetic adapter (200), and wherein the first outer diameter portion and/or the second outer diameter portion is configured to provide a guide and/or a radial bearing for a first diameter portion and/or a second diameter portion of the magnetic adapter (200).
46. The writing instrument (100) according to any one of embodiments 28 to 45, wherein the magnetic adapter (200) comprises a magnetic adapter nib (240) wherein the magnetic adapter nib (240) is configured for fluid communication with a nib (150) of the writing instrument (100) when the magnetic adapter (200) is coupled with the writing instrument (100), more specifically, wherein the magnetic adapter nib (240) is coupled with the first diameter portion and protrudes beyond a distal end (211) of the supporting structure.
47. The writing instrument (100) according to any one of embodiments 28 to 46, wherein an outer diameter (OD2) of the supporting structure (210) at a proximal end (212) is configured such that, when the magnetic adapter (200) is coupled with the writing instrument (100), the outer diameter (OD2) is substantially equal to an outer diameter (WD4) of a portion of an outer circumference of the writing instrument (100) adjacent the proximal end (212).
48. The writing instrument (100) according to any one of embodiments 29 to 47, wherein the body (110) comprises a first body portion (110a) comprising the writing orifice (120) and the distal end (111), and a second body portion (110b), wherein the first body portion (110a) is removably coupled with the second body portion (110b).
49. The writing instrument (100) according to any one of embodiments 30 to 48, wherein the nib (150) comprises a fibrous or porous material.
50. The writing instrument (100) according to any one of embodiments 30 to 49, wherein the reservoir (140) is part of the body (110), or releasably coupled with the body (110).
51. The writing instrument (100) according to any one of embodiments 30 to 50, wherein the reservoir (140) comprises a fibrous or porous filler material.
52. The writing instrument (100) according to any one of embodiments 30 to 51, comprising a coupling component (170) configured to establish fluid communication between the nib (150) and the reservoir (140), wherein a distal end portion of the coupling component (170) is coupled to the nib (150), and a proximal end portion of the coupling component (170) is coupled to the reservoir (140).
53. The writing instrument (100) according to embodiment 52, wherein the coupling component (170) comprises a fibrous or porous material, wherein the coupling component (170) is configured to transport ink from the reservoir (140) to the nib (150).
54. The writing instrument (100) according to any one of embodiments 28 to 53, wherein the magnetic adapter (200) is a magnetic adapter (200) according to any one of embodiments 1 to 27.
55. A writing instrument kit, comprising:
   at least one magnetic adapter (200) for a writing instrument (100) according to any one of embodiments 1 to 27, and
   at least one writing instrument (100) according to any one of embodiments 28 to 54.
56. A writing instrument assembly (10), comprising:
   a magnetic adapter (200) according to any one of embodiments 1 to 27, and
   a writing instrument (100) according to any one of embodiments 28 to 54,
   wherein the magnetic adapter (200) is coupled with the writing instrument (100).
57. The writing instrument assembly (10) according to embodiment 56, wherein the magnetic adapter (200) is coupled with the writing instrument (100) via the first coupling arrangement (230) and the second coupling arrangement (130), wherein an axial position of the magnetic adapter (200) relative to the writing instrument (100) along the longitudinal axis (x) is fixed, more specifically wherein the magnetic adapter (200) is non-translatable relative to the writing instrument (100) along the longitudinal axis (x).
58. The writing instrument assembly (10) according to embodiment 56 or embodiment 57, comprising a cap releasably couplable to the magnetic adapter (200) and/or the body (110) at a distal end (111) thereof.
59. A system (1) for determining and/or tracking a location of a writing instrument assembly (10), the system (1) comprising:
   a writing instrument assembly (10) according to any one of embodiments 56 to 58, and a plurality of magnetometers (30) configured to create a sensing volume and configured to measure a magnetic field associated with the magnetic body (220) of the magnetic adapter (200), wherein the system (1), more specifically a processing unit (40) of or coupled with the system (1), is configured to track movement and/or location of the writing instrument assembly (100), particularly in at least five degrees of freedom, based on the magnetic field measurements.
60. The system (10) according to embodiment 59, wherein the processing unit (40) is configured to control a representation of the writing instrument assembly (10) on an output device (50).
61. A method for determining and/or tracking a location of a writing instrument assembly (10), comprising:
   obtaining magnetic field measurements associated with a magnetic body (220) of a magnetic adapter (200) of a writing instrument assembly (10) according to any one of embodiments 56 to 58 and measured with a plurality of magnetometers (30), and
   determining and/or tracking a location of the writing instrument assembly (10) based on the obtained magnetic field measurements.
62. The method according to embodiment 61, further comprising:
   detecting a magnetic signature of the magnetic body (220) based on the obtained magnetic field measurements, and
   identifying writing instrument information and/or magnetic adapter information based on the magnetic signature, wherein writing instrument information is related to the writing instrument (100) with which the magnetic adapter (200) is couplable and/or wherein magnetic adapter information is related to the magnetic adapter (200).
63. The method according to embodiment 62, wherein the magnetic signature includes one or more of a magnetic field strength of the magnetic body (220), a magnetic field shape of the magnetic body (220) and a magnetic field location of the magnetic body (220).
64. The method according to embodiment 62 or embodiment 63, wherein writing instrument information includes one or more of a type, a color, a nib type and a nib shape of the writing instrument (100), and/or
   wherein magnetic adapter information includes one or more of location information of the magnetic body (220) relative to the magnetic adapter (200) and location information of the magnetic body (220) relative to the writing instrument (100) with which the magnetic adapter (200) is couplable.
65. The method according to any one of embodiments 62 to 64, further comprising:
   controlling a virtual reproduction of the writing instrument assembly (10) and/or a writing operation of the writing instrument assembly (10) on a writing surface by a user based on the identified writing instrument information and/or magnetic adapter information.
66. The method according to embodiment 65, wherein controlling the virtual reproduction comprises:
   adapting and/or selecting at least one setting of the virtual reproduction based on the identified writing instrument information and/or magnetic adapter information.
67. The computer-implemented method according to any one of embodiments 62 to 66, wherein identifying writing instrument information and/or magnetic adapter information based on the detected magnetic signature comprises:
   accessing a database comprising a predefined data list which correlates writing instrument information and/or magnetic adapter information to the magnetic signature, and
   selecting writing instrument information and/or magnetic adapter information of the predefined data list based on a match of writing instrument information and/or magnetic adapter information with the magnetic signature.
68. The method according to embodiment 66 or 67, when dependent embodiment on 66, further comprising:
   controlling the virtual reproduction based on the determined and/or tracked location of the writing instrument assembly (10).
69. The method according to embodiment 68, further comprising:
   representing the controlled virtual reproduction on at least one output device (500), more specifically wherein the representation and/or movement of the virtual reproduction on the at least one output device (500) is based on one or more of the writing instrument information, magnetic adapter information and the determined and/or tracked location of the writing instrument (100) relative to a writing surface.
70. The method according to any one of embodiments 61 to 69, wherein the method is a computer-implemented method.
71. A computer system configured to execute the computer-implemented method according to embodiment 70.
72. A computer program configured to execute the computer-implemented method according to embodiment 70.
73. A computer-readable medium or signal storing the computer program of embodiment 72.

### REFERENCE NUMERALS

- X: first reference axis
- Y: second reference axis
- Z: vertical reference axis
- xₛ: first writing support axis

- yₛ: second writing support axis

- zₛ: third writing support axis
- U: user
- x: body longitudinal axis
- m: magnetic body longitudinal axis
- a: supporting structure longitudinal axis
- l: distance
- ID1: first diameter
- ID2: second diameter
- ID3: third diameter

- AD1: inner diameter

- OD1: outer diameter of supporting structure
- OD2: outer diameter of supporting structure
- WD1: first outer diameter
- WD2: second outer diameter

- WD3: third outer diameter

- WD4: outer diameter of a portion of body
- 1: system
- 10: writing instrument assembly
- 20: writing support

- 30: magnetometers

- 40: processing unit
- 50: output device
- 51: display

- 100: writing instrument
- 110: writing instrument body
- 110a: first body portion
- 110b: second body portion
- 111: distal end
- 112: proximal end
- 113: distal end portion
- 120: writing orifice
- 130: second coupling arrangement
- 130a: second locking portion
- 130b: second stop face
- 140: reservoir
- 150: nib
- 151: distal end portion of nib
- 170: coupling component
- 200: magnetic adapter
- 210: tubular supporting structure
- 211: distal end of supporting structure
- 212: proximal end of supporting structure
- 220: magnetic body
- 220a: first magnetic body
- 220b: second magnetic body
- 222: magnetic moment vector
- 230: first coupling arrangement
- 230a: first locking portion
- 230b: first stop face
- 240: magnetic adapter nib

## Claims

1. A magnetic adapter (200) for a writing instrument (100), comprising:
a tubular supporting structure (210) configured to receive at least a portion of a writing instrument body (110) of the writing instrument (100) therein, wherein the body (110) of the writing instrument (100) comprises a longitudinal axis (x), and
a magnetic body (220) coupled to the tubular supporting structure (210),
wherein the tubular supporting structure (210) comprises a first coupling arrangement (230),
wherein the first coupling arrangement (230) is configured to be releasably coupled with a second coupling arrangement (130) of the writing instrument (100) such that an axial position of the magnetic adapter (200) relative to the writing instrument (100) along the longitudinal axis (x) is fixed when coupled.

2. The magnetic adapter (200) according to claim 1, wherein the magnetic adapter (200) is configured as a writing instrument tip component, and wherein the magnetic adapter (200) is configured to be coupled with a distal end portion (113) of the writing instrument (100).

3. The magnetic adapter (200) according to claim 1 or claim 2, wherein the magnetic body (220) is ring-shaped and comprises a magnetic body longitudinal axis (m) extending along a length of the magnetic body, wherein the magnetic body (220) is coupled with the tubular supporting structure (210) such that the magnetic body longitudinal axis (m) extends coaxially with a supporting structure longitudinal axis (a).

4. The magnetic adapter (200) according to any one of the preceding claims, wherein the magnetic body (220) is configured to generate a magnetic field, and wherein the magnetic body (220) defines a magnetic moment vector (222), wherein the magnetic moment vector (222) is substantially coaxial with a magnetic body longitudinal axis (m).

5. The magnetic adapter (200) according to claim 4, wherein the magnetic body (220) comprises a first ring-shaped magnetic body (220a) and at least one second ring-shaped magnetic body (220b) coupled with the first ring-shaped magnetic body (220a), wherein each of the first and second ring-shaped magnetic bodies (220a, 220b) is configured to generate a magnetic field and wherein the first and second ring-shaped magnetic bodies (220a, 220b) together define the magnetic moment vector (222), more specifically wherein the first and second ring-shaped magnetic bodies (220a, 220b) are firmly coupled and rotationally oriented relative to each other such that the magnetic moment vector (222) is substantially coaxial with the magnetic body longitudinal axis (m).

6. The magnetic adapter (200) according to any one of the preceding claims, wherein the magnetic body (220) of the magnetic adapter (200) is configured to define a magnetic signature which is indicative of writing instrument information related to the writing instrument (100) with which the magnetic adapter (200) is couplable and/or magnetic adapter information related to the magnetic adapter (200), wherein the magnetic signature is detectable based on a magnetic field measurements associated with the magnetic body (220) with a plurality of magnetometers (30).

7. The magnetic adapter (200) according to any one of the preceding claims, wherein the first coupling arrangement (230) comprises a first locking portion (230a) arranged on an inner circumference of the supporting structure (210), wherein the first locking portion (230a) is configured to be releasably coupled with a second locking portion (130a) of the second coupling arrangement (130) when the magnetic adapter (200) is coupled with the writing instrument (100).

8. A writing instrument (100), comprising:
a writing instrument body (110) configured to be at least partially received within a tubular supporting structure (210) of a magnetic adapter (200), wherein the magnetic adapter (200) comprises a magnetic body (220) coupled to the tubular supporting structure (210),
wherein the body (110) comprises a longitudinal axis (x) and a second coupling arrangement (130),
wherein the second coupling arrangement (130) is configured to be releasably coupled with a first coupling arrangement (230) of the magnetic adapter (200) such that an axial position of the magnetic adapter (200) relative to the writing instrument (100) along the body longitudinal axis (x) is fixed when coupled.

9. The writing instrument (100) according to claim 8, wherein the writing instrument comprises an ink system and a writing orifice (120) at a distal end (111) of the body (110), wherein the body (110) comprises a distal end portion (113) including the distal end (111), and wherein the distal end portion (113) is configured to be at least partially received within the tubular structure (210) of the magnetic adapter (200).

10. The writing instrument (100) according to claim 8 or claim 9, wherein the second coupling arrangement (130) comprises a second locking portion (130a) arranged on an outer circumference of the body (110), more specifically on a distal end portion (113) of the writing instrument (100), wherein the second locking portion (130a) is configured to be releasably coupled with a first locking portion (230a) of the first coupling arrangement (230) when the writing instrument (100) is coupled with the magnetic adapter (200).

11. The writing instrument (100) according to claim 9 or claim 10, wherein the body (110), more specifically the distal end portion (113), comprises a stepped outer circumference, wherein the stepped outer circumference comprises a first outer diameter portion having a first outer diameter (WD1) and a second outer diameter portion having a second outer diameter (WD2), wherein at least one outer shoulder is provided between the first outer diameter portion and the second outer diameter portion,
wherein the first outer diameter portion is arranged between a distal end (111) of the body (110), more specifically of the distal end portion (113), and the at least one outer shoulder and wherein the second outer diameter portion is arranged between a second stop face (130b) of the second coupling arrangement (130) facing distally and the at least one outer shoulder, wherein the first outer diameter (WD1) is smaller than the second outer diameter (WD2).

12. A writing instrument assembly (10), comprising:
a magnetic adapter (200) according to any one of claims 1 to 7, and
a writing instrument (100) according to any one of claims 8 to 11,
wherein the magnetic adapter (200) is coupled with the writing instrument (100).

13. The writing instrument assembly (10) according to claim 12, wherein the magnetic adapter (200) is coupled with the writing instrument (100) via the first coupling arrangement (230) and the second coupling arrangement (130), wherein an axial position of the magnetic adapter (200) relative to the writing instrument (100) along the body longitudinal axis (x) is fixed, more specifically wherein the magnetic adapter (200) is non-translatable relative to the writing instrument (100) along the body longitudinal axis (x).

14. A system (1) for determining and/or tracking a location of a writing instrument assembly (10), the system (1) comprising:
a writing instrument assembly (10) according to claim 12 or claim 13, and
a plurality of magnetometers (30) configured to create a sensing volume and configured to measure a magnetic field associated with the magnetic body (220) of the magnetic adapter (200), wherein the system (1) is configured to track movement and/or location of the writing instrument assembly (100) based on the magnetic field measurements.

15. A method for determining and/or tracking a location of a writing instrument assembly (10), comprising:
obtaining magnetic field measurements associated with a magnetic body (220) of a magnetic adapter (200) of a writing instrument assembly (10) according to claim 12 or claim 13 and measured with a plurality of magnetometers (30),
determining and/or tracking a location of the writing instrument assembly (10) based on the obtained magnetic field measurements,
detecting a magnetic signature of the magnetic body (220) based on the obtained magnetic field measurements, and
identifying writing instrument information and/or magnetic adapter information based on the magnetic signature, wherein writing instrument information is related to the writing instrument (100) with which the magnetic adapter (200) is couplable and/or wherein magnetic adapter information is related to the magnetic adapter (200).
